# FASCICULE DE BREVET EUROPEEN

(11) **EP 3 409 054 B1**
(45) Date de publication et mention de la délivrance du brevet: **26.02.2020**
(21) Numéro de dépôt: 17700461.1
(22) Date de dépôt: 17.01.2017
(51) Int. Cl.: H04W 56/00

(54) **PROCEDE DE SYNCHRONISATION POUR UN NOEUD DANS UN RÉSEAU CELLULAIRE**
SYNCHRONISATIONS-VERFAHREN FÜR EINEN KNOTEN IN EINEM MOBILFUNKNETZ
SYNCHRONIZATION METHOD FOR A NODE IN A CELLULAR NETWORK

(30) Priorité: 28.01.2016 FR 1650688
(43) Date de publication de la demande: 05.12.2018
(73) Titulaire: Sagemcom Broadband SAS, 92500 Rueil-Malmaison (FR)
(72) Inventeur: LALAM, Massinissa, 92500 Rueil Malmaison (FR); LESTABLE, Thierry, 92500 Rueil Malmaison (FR)
(74) Mandataire: Cabinet Le Guen Maillet
(86) Numéro de dépôt international: PCT/EP2017/050896
(87) Numéro de publication internationale: WO 2017/129447

(56) Documents cités:
- WO-A1-2012/158578
- CN-A- 104 394 586
- US-A1- 2005 281 247

## Description

L'invention concerne un procédé de synchronisation d'une passerelle dans un réseau sans fil à grande portée et permettant une faible consommation d'énergie, des dispositifs et un système mettant en œuvre le procédé.

L'Internet se transforme progressivement en un réseau étendu, appelé « Internet des Objets », reliant toutes sortes d'objets, équipements ou terminaux devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie dédiée aux communications des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa («Long Range » en terminologie anglo-saxonne). La technologie LoRa opère sur des bandes de fréquences connues sous l'appellation « *Bande ISM* » (Industrie, Science et Médical) comprenant des bandes de fréquences pouvant être utilisées librement pour des applications industrielles, scientifiques et médicales.

Un réseau basé sur la technologie LoRa (appelé « réseau LoRa » par la suite) est composé de stations de base ou passerelles (« gateways » en terminologie anglo-saxonne). Les passerelles sont aptes à détecter des messages émis dans leur zone par des équipements ou terminaux (« end-devices » en terminologie anglo-saxonne) et de les remonter vers au moins un serveur centralisé (« Central Network Server » en terminologie anglo-saxonne) qui les traitera.

Dans un réseau LoRa un terminal n'est pas rattaché à une passerelle. Chaque passerelle à portée d'un terminal peut ainsi servir de relai entre ledit terminal et le serveur centralisé. Si une passerelle parvient à décoder un message émis par un terminal (voie montante), alors elle le retransmet au serveur centralisé pour traitement. Si un message doit être transmis d'un serveur centralisé audit terminal (voie descendante), c'est le serveur centralisé qui se charge de déterminer quelle passerelle doit relayer le message. Chaque communication entre une passerelle et un terminal d'un réseau LoRa tel que décrit précédemment se fait en utilisant un protocole appelé LoRaWAN.

A l'instar des réseaux cellulaires classiques, on peut envisager plusieurs types de passerelles. Les passerelles généralement placées sur des points hauts, dites macro-passerelles, vont couvrir une grande zone géographique. D'autres passerelles, dites femto-passerelles, ont une couverture géographique plus réduite, mais sont utilisées pour relayer des communications de terminaux dans des zones non couvertes par les macro-passerelles, par exemple dans des bâtiments.

Dans un réseau LoRa, chaque passerelle émet périodiquement un signal appelé balise (« beacon » en terminologie anglo-saxonne) de manière à fournir à des terminaux le supportant (appelés terminaux de classe B par la suite) un service de communication assurant une certaine qualité de service. Il est nécessaire que toutes les balises émises par des passerelles dans un réseau LoRa soient synchronisées entre elles. Une telle synchronisation est en général obtenue par un asservissement de chaque passerelle (i.e. d'une horloge de chaque passerelle) sur un signal de référence, tel qu'un signal radio GPS (système de positionnement global : « Global Positioning System » en terminologie anglo-saxonne). Une telle solution de synchronisation nécessite d'une part que chaque passerelle possède des moyens de synchronisation tels que des moyens de décodage du signal de synchronisation (par exemple un module GPS), et d'autre part, que chaque passerelle soit en situation de pouvoir recevoir ledit signal de synchronisation.

La plupart des macro-passerelles sont équipées de moyens de synchronisation, en général exploitant le signal radio GPS. Toutefois certaines macro-passerelles peuvent être, au moins temporairement, hors de portée d'un signal GPS. Par ailleurs, il n'est pas rare que les femto-passerelles déployées en intérieur ne soient tout simplement pas équipées de moyens de synchronisation. Certaines passerelles sont donc, au moins temporairement, incapables de se synchroniser par le biais traditionnellement utilisé dans un réseau LoRa.

Il est souhaitable de pallier ces inconvénients de l'état de la technique. Il est notamment souhaitable de proposer une méthode permettant à une passerelle d'un réseau LoRa, hors de portée d'un signal radio de référence d'une autre technologie ou ne possédant pas de moyens de synchronisation, de se synchroniser afin de pouvoir émettre des balises synchronisées avec des balises émises par des passerelles de classe B du réseau LoRa.

Il est par ailleurs souhaitable de proposer une méthode qui soit simple à mettre en œuvre et à faible coût et notamment, ne nécessitant pas un ajout de modules supplémentaires tels qu'un module GPS dans une passerelle d'un réseau LoRa.

Selon un premier aspect de la présente invention, l'invention concerne un procédé de synchronisation d'une passerelle d'un réseau sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau supportant ledit mode, dites passerelles de classe B, les émissions de balises étant synchronisées entre chaque passerelle de classe B, chaque période de communication étant divisée en un nombre prédéfini de sous-périodes, un terminal du réseau fonctionnant suivant ledit mode ne pouvant communiquer de manière bidirectionnelle avec un serveur par l'intermédiaire d'une passerelle de classe B que pendant une sous-période qui lui a été allouée. Le procédé comprend, lorsqu'il est mis en œuvre par une première passerelle : émettre à destination dudit serveur, par l'intermédiaire d'au moins une seconde passerelle dudit réseau, une trame comprenant une demande d'aide à la synchronisation; recevoir une trame comprenant des informations représentatives d'une réponse à ladite demande en provenance d'une passerelle dudit réseau, dite passerelle désignée, équipée de moyens de synchronisation, la passerelle désignée ayant été désignée par le serveur parmi les au moins une seconde passerelle, la réception de ladite trame permettant à la première passerelle de déterminer au moins une période de communication au cours de laquelle la première passerelle doit recevoir une trame, dite trame de synchronisation, en provenance de la passerelle désignée; obtenir des informations représentatives d'une sous-période de chaque période de communication déterminée utilisée par la passerelle désignée pour transmettre une trame de synchronisation, ladite sous-période ayant un écart prédéfini avec une balise suivant directement la période de communication ; recevoir au moins une trame de synchronisation ; et, pour chaque trame de synchronisation reçue : déterminer à partir d'un instant de réception de ladite trame de synchronisation et de l'écart prédéfini, au moins un prochain instant d'émission d'une balise par chaque passerelle de classe B dudit réseau ; et, transmettre une balise à chaque prochain instant d'émission déterminé.

De cette manière, la première passerelle devient, au moins temporairement, une passerelle de classe B puisqu'elle peut transmettre des balises synchronisées avec les balises des autres passerelles de classe B du réseau.

Dans un mode de réalisation, avant d'émettre la trame comprenant une demande d'aide à la synchronisation, la première passerelle vérifie si au moins une seconde passerelle est à portée pour recevoir ladite trame et pour transmettre à la première passerelle des trames de synchronisation, aucune trame comprenant une demande d'aide à la synchronisation n'étant émise si aucune passerelle n'est à portée.

Dans un mode de réalisation, suite à l'émission de la trame comprenant la demande d'aide à la synchronisation, si aucune réponse à ladite trame n'est reçue après une durée prédéfinie, la première passerelle renouvelle sa demande d'aide à la synchronisation en émettant une nouvelle trame de demande d'aide à la synchronisation.

Selon un deuxième aspect de l'invention, l'invention concerne un procédé de synchronisation d'une passerelle d'un réseau sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau supportant ledit mode, dites passerelles de classe B, les émissions de balises étant synchronisées entre chaque passerelle de classe B, chaque période de communication étant divisée en un nombre prédéfini de sous-périodes, un terminal du réseau fonctionnant suivant ledit mode ne pouvant communiquer de manière bidirectionnelle avec un serveur par l'intermédiaire d'une passerelle de classe B que pendant une sous-période qui lui a été allouée. Le procédé comprend, lorsqu'il est mis en œuvre par le serveur: recevoir au moins une requête contenant une demande d'aide à la synchronisation formulée par une première passerelle et relayée par au moins une seconde passerelle ; vérifier une faisabilité d'une aide à la synchronisation, l'aide à la synchronisation étant possible lorsqu'au moins une passerelle parmi les au moins une seconde passerelle est équipée de moyens de synchronisation ; lorsque l'aide à la synchronisation est possible, désigner une seconde passerelle, dite passerelle désignée, équipée de moyens de synchronisation, pour relayer vers la première passerelle des informations représentatives d'une réponse à la demande d'aide à la synchronisation, lesdites informations permettant de mettre en place une transmission d'au moins une trame, dite trame de synchronisation, par la passerelle désignée, à destination de la première passerelle, dans une sous-période prédéterminée d'au moins une période de communication, chaque transmission d'une trame de synchronisation permettant à la première passerelle de déterminer au moins un instant d'émission d'une balise synchronisé avec des instants de transmission de balises de chaque passerelle de classe B dudit réseau; et, transmettre une requête comprenant lesdites informations à la passerelle désignée.

Selon un troisième aspect de l'invention, l'invention concerne un procédé de synchronisation d'une passerelle d'un réseau sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau supportant ledit mode, dites passerelles de classe B, les émissions de balises étant synchronisées entre chaque passerelle de classe B, chaque période de communication étant divisée en un nombre prédéfini de sous-périodes, un terminal du réseau fonctionnant suivant ledit mode ne pouvant communiquer de manière bidirectionnelle avec un serveur par l'intermédiaire d'une passerelle de classe B que pendant une sous-période qui lui a été allouée. Le procédé comprend, lorsqu'il est mis en œuvre par une seconde passerelle dudit réseau, la seconde passerelle étant de classe B et étant équipée de moyens de synchronisation : recevoir une requête en provenance du serveur comprenant des informations représentatives d'une réponse à une demande d'aide à la synchronisation formulée par une première passerelle, ladite demande ayant été relayée par la seconde passerelle vers ledit serveur ; transmettre une trame comprenant ladite réponse à la demande d'aide à la synchronisation à la première passerelle, ladite réponse permettant à la première passerelle de déterminer dans quelle sous-période d'au moins une période de communication la première passerelle doit recevoir une trame de synchronisation ; et, transmettre au moins une trame de synchronisation à la première passerelle dans ladite sous-période, une réception d'une trame de synchronisation dans ladite sous-période permettant à la première passerelle de déterminer au moins un instant d'émission d'une balise synchronisé avec des instants de transmission de balises de chaque passerelle de classe B dudit réseau.

Selon un quatrième aspect de l'invention, l'invention concerne un procédé de synchronisation d'une passerelle mis en œuvre dans un réseau sans fil à grande portée et permettant une faible consommation d'énergie, destiné à permettre à une passerelle de fonctionner selon un mode de communication, dit de classe B, dans lequel des périodes de communication sont définies à partir d'émissions périodiques de balises par chaque passerelle dudit réseau supportant ledit mode, dites passerelles de classe B, les émissions de balises étant synchronisées entre chaque passerelle de classe B, chaque période de communication étant divisée en un nombre prédéfini de sous-périodes, un terminal du réseau fonctionnant suivant ledit mode ne pouvant communiquer de manière bidirectionnelle avec un serveur par l'intermédiaire d'une passerelle de classe B que pendant une sous-période qui lui a été allouée. Le procédé est mis en œuvre par un système et comprend le procédé selon le premier aspect mis en œuvre par une première passerelle, le procédé selon le deuxième aspect mis en œuvre par une seconde passerelle (12A), la seconde passerelle étant de classe B et étant équipée de moyens de synchronisation et le procédé selon le troisième aspect mis en œuvre par un serveur.

Selon un mode de réalisation, la trame comprenant la demande d'aide à la synchronisation comprend un identifiant unique permettant au serveur de déterminer quelle passerelle a fait la demande d'aide à la synchronisation.

Selon un mode de réalisation, la sous-période utilisée pour transmettre une trame de synchronisation est déterminée par la première passerelle et les informations représentatives d'une réponse à la demande d'aide à la synchronisation comprennent une information représentative de ladite sous-période.

Selon un mode de réalisation, la sous-période utilisée pour transmettre une trame de synchronisation est déterminée par le serveur et la trame comprenant la demande d'aide à la synchronisation comprend une information représentative de ladite sous-période.

Selon un mode de réalisation, ledit procédé est mis en œuvre pendant une durée prédéterminée.

Selon un mode de réalisation, une pluralité de trames de synchronisation sont transmises avec une périodicité prédéterminée.

Selon un mode de réalisation, lorsque la sous-période utilisée pour transmettre la trame de synchronisation coïncide avec une sous-période attribuée à la seconde passerelle pour d'autres communications, le serveur désigne, temporairement ou définitivement, une autre passerelle de classe B dudit réseau, équipée de moyens de synchronisation, pour transmettre au moins une trame de synchronisation à la première passerelle.

Selon un mode de réalisation, préalablement à l'émission de la trame comprenant la demande d'aide à la synchronisation, la première passerelle transmet au serveur une demande d'aide à la synchronisation préliminaire en utilisant un lien de communication directe avec le serveur, déclenchant une mise en œuvre par le serveur d'une procédure de prétraitement permettant au serveur de déterminer s'il peut autoriser la première passerelle à transmettre la trame comprenant la demande d'aide à la synchronisation.

Selon un mode de réalisation, préalablement à l'émission de la trame comprenant la demande d'aide à la synchronisation, le serveur envoie une requête à la première passerelle demandant à la première passerelle d'émettre une trame comprenant une demande d'aide à la synchronisation.

Selon un mode de réalisation, les informations représentatives d'une réponse à la demande d'aide à la synchronisation comprennent une information permettant à une pluralité de passerelles, comprenant la première passerelle, de déterminer au moins un prochain instant d'émission d'une balise par chaque passerelle de classe B dudit réseau et de transmettre une balise à chaque prochain instant d'émission déterminé.

Selon un mode de réalisation, le réseau est un réseau LoRa.

Selon un cinquième aspect de l'invention, l'invention concerne un dispositif de type passerelle comprenant des moyens pour mettre en œuvre le procédé selon le premier aspect.

Selon un sixième aspect, l'invention concerne un dispositif de type passerelle comprenant des moyens pour mettre en œuvre le procédé selon le troisième aspect.

Selon un septième aspect de l'invention, l'invention concerne un dispositif de type serveur comprenant des moyens pour mettre en œuvre le procédé selon le deuxième aspect.

Selon un huitième aspect, l'invention concerne un système comprenant au moins un dispositif selon le cinquième aspect, au moins un dispositif selon le sixième aspect et un dispositif selon le septième aspect.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau LoRa dans lequel est mise en œuvre l'invention ;
- la Fig. 2A illustre schématiquement un module de traitement compris dans un serveur ;
- la Fig. 2B illustre schématiquement un module de traitement compris dans une passerelle ne comprenant pas de moyens de synchronisation ;
- la Fig. 2C illustre schématiquement un module de traitement compris dans une passerelle comprenant des moyens de synchronisation ;
- la Fig. 3A illustre schématiquement un premier exemple de procédé selon l'invention de synchronisation d'une passerelle ne possédant pas de moyens de synchronisation ; et,
- la Fig. 3B illustre schématiquement un deuxième exemple de procédé selon l'invention de synchronisation d'une passerelle ne possédant pas de moyens de synchronisation.

L'invention est décrite par la suite dans un contexte de réseau LoRa. L'invention s'applique toutefois dans d'autres contextes pour tous types de réseaux sans fil à grande portée et permettant une faible consommation d'énergie où les stations de base émettent de manière synchronisée une balise.

On note par ailleurs que nous décrivons par la suite un réseau LoRa comportant un serveur. Le terme serveur est ici un terme générique pouvant représenter un serveur ou une pluralité de serveurs connectés entre eux comprenant un serveur d'application adapté pour gérer des applications mises en œuvre par des terminaux d'un réseau LoRa.

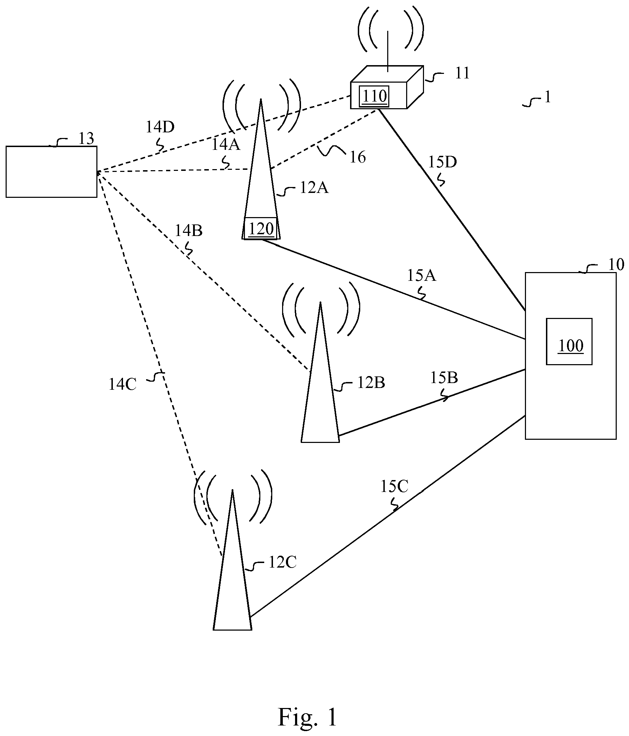

La **Fig. 1** illustre schématiquement un réseau LoRa dans lequel est mise en œuvre l'invention.

Dans l'exemple de la Fig. 1, le réseau LoRa 1 comprend un serveur 10, trois macro-passerelles 12A, 12B et 12C, une femto-passerelle 11 et un terminal 13. La macro-passerelle 12A (respectivement la macro-passerelle 12B, la macro-passerelle 12C et la femto-passerelle 11) communique avec le serveur 10 par l'intermédiaire d'un lien de communication 15A (respectivement 15B, 15C et 15D). Ce lien est généralement un lien sur un réseau IP (« Internet Protocole » en terminologie anglo-saxonne) dont le support physique importe peu (filaire et/ou sans fil) et qu'on nomme par la suite lien direct au serveur 10, même si dans la réalité plusieurs nœuds réseau peuvent séparer une passerelle dudit serveur 10. La macro-passerelle 12A (respectivement la macro-passerelle 12B, la macro-passerelle 12C et la femto-passerelle 11) communique avec le terminal 13 par l'intermédiaire d'un lien de communication sans fil 14A (respectivement 14B, 14C et 14D) utilisant la technologie LoRa. La femto-passerelle 11 communique avec la macro-passerelle 12A par l'intermédiaire d'un lien de communication sans fil 16. La femto-passerelle 11 peut communiquer de la même manière avec les macro-passerelles 12B, 12C par l'intermédiaire de liens de communication sans fil non représentés. Chaque communication entre passerelles se fait en utilisant une même interface radio que celle supportée par le protocole LoRaWAN pour communiquer avec des terminaux. Ainsi une passerelle se fait passer temporairement pour un terminal.

Le serveur 10 comprend un module de traitement 100. La femto-passerelle 11 comprend un module de traitement 110. Chaque macro-passerelle 12A, 12B et 12C comprend un module de traitement 120. Seul le module de traitement 120 de la passerelle 12A est représenté.

On note que les communications entre les terminaux et les passerelles et les communications entre passerelles d'un réseau LoRa utilisent des trames compatibles avec le protocole LoRaWAN, ces trames ne comportent qu'un seul champ pouvant contenir une adresse (à l'exception des balises qui ne comportent aucune adresse). Les trames compatibles avec le protocole LoRaWAN sont émises en mode point-à-tous (« broadcast » en terminologie anglo-saxonne) dans le sens montant, *i.e.* vers le serveur10 ; et en mode point-à-point (« unicast » en terminologie anglo-saxonne) ou en mode point-à-multi-point (« multicast » en terminologie anglo-saxonne) dans le sens descendant, *i.e.* à partir du serveur 10. Dans la suite, on parlera de trames transmises en mode multidiffusion, le sens de direction levant l'ambiguïté de manière évidente pour l'homme de métier. Les communications entre le serveur 10 et les passerelles (macro-passerelles 12A, 12B et 12C et femto-passerelle 11) utilisent, par exemple, un protocole de type HTTP à base de requêtes.

Lorsque le terminal 13 souhaite transmettre une trame, dite trame montante, contenant des données applicatives et/ou des informations de contrôle, ladite trame montante est transmise en mode multidiffusion. Chaque passerelle à portée du terminal 13, ici les macro-passerelles 12A, 12C et 12B et la femto-passerelle 11 reçoit la trame montante et l'insère dans une requête HTTP, dite requête HTTP montante, qui est transmise au serveur 10. Le serveur 10 reçoit donc une requête HTTP montante de chaque passerelle ayant reçu la trame montante. Le serveur 10 fait ensuite suivre les données applicatives à un serveur d'application associé au terminal 13 (non représenté) et gère les informations de contrôle.

Lorsque le serveur 10 doit transmettre des données applicatives en provenance du serveur d'application et/ou souhaite transmettre des informations de contrôle au terminal 13, il crée des informations nécessaires à la création d'une trame descendante à transmettre au terminal 13 et les insère dans une requête HTTP, dite requête HTTP descendante, et transmet la requête à une seule passerelle qu'il désigne parmi les passerelles ayant reçu la trame montante (ici une des macro-passerelles 12A, 12B ou 12C ou la femto-passerelle 11). Les données applicatives et/ou les informations de contrôle destinées au terminal 13 sont extraites des informations contenues dans la requête HTTP descendante et sont ensuite transmises dans une trame en mode multidiffusion par la passerelle désignée à destination du terminal 13. On note que le serveur 10 sait identifier de manière unique toutes les passerelles du réseau LoRa 1.

Dans l'exemple de la Fig. 1, on suppose que la femto-passerelle ne possède pas de moyens de synchronisation, mais que chaque macro-passerelle possède de tels moyens (comme par exemple un module GPS). Toutefois, la passerelle ne possédant pas de moyens de synchronisation dans le réseau LoRa 1 aurait tout aussi bien pu être l'une des macro-passerelles 12A, 12B et 12C.

Il existe deux modes de communication dans un réseau LoRa : un premier mode de communication, dit de classe A, et un second mode de communication, dit de classe B.

Dans le mode de communication de classe A, un terminal fonctionnant selon le mode de communication de classe A, dit terminal de classe A, ayant émis une trame montante à destination d'un serveur définit deux fenêtres de réception à la suite de la transmission de la trame montante. Chaque fenêtre de réception représente une période durant laquelle le terminal de classe A se met en écoute d'une trame descendante contenant des données provenant du serveur. Les deux fenêtres de réception représentent donc les deux seules opportunités qu'a le serveur pour communiquer avec le terminal suite à l'émission d'une trame montante. Une transmission bidirectionnelle entre le terminal de classe A et le serveur ne peut se faire qu'à l'initiative du terminal de classe A. En effet, le terminal de classe A ne se met en écoute pour recevoir une trame descendante que pendant les deux fenêtres de réception afin d'économiser de l'énergie.

Dans le mode de communication de classe B, une procédure est mise en place afin qu'un terminal fonctionnant selon le mode de fonctionnement de classe B, dit terminal de classe B, ne se réveille qu'à des moments précis négociés avec le serveur. Pour ce faire, des périodes de communication sont définies. Chaque période de communication est définie à partir d'émissions périodiques de balises par les passerelles du réseau LoRa, une période de communication étant située entre deux balises. Chaque période de communication est divisée en un nombre de sous-périodes (« ping slots » en terminologie anglo-saxonne) prédéfini par le protocole LoRaWAN. Un terminal de classe B d'un réseau LoRa ne peut communiquer de manière bidirectionnelle avec le serveur, par l'intermédiaire d'une passerelle supportant le mode de communication de classe B, dite passerelle de classe B, que pendant un certain nombre de sous-périodes qui lui ont été allouées. En pratique, dans un réseau LoRa, les balises sont périodiquement émises avec une période de « 128 s » et des sous-périodes de « 30 ms » sont réparties sur une période de communication de « 122.880 s » suivant chaque balise. Chaque sous-période d'une période de communication est à une position fixe par rapport à chacune des deux balises encadrant ladite période de communication. Il existe donc un écart prédéfini par le protocole LoRaWAN entre la balise précédent (respectivement suivant) une période de communication et chaque sous-période de ladite période de communication. Il est alors important que les émissions de balises par les passerelles d'un réseau LoRa soient synchronisées entre elles avec suffisamment de précision afin de supporter le mode de communication de classe B sans erreur.

On note qu'un terminal se connectant à un réseau LoRa fonctionne par défaut en mode de communication de classe A et c'est à sa demande qu'il peut passer à un mode de communication de classe B.

Les macro-passerelles 12A, 12B et 12C sont des passerelles de classe B. La femto-passerelle 11 est, dans un premier temps une passerelle de classe A. Le procédé de synchronisation selon l'invention va permettre à la femto-passerelle 11 de devenir, au moins temporairement, une passerelle de classe B.

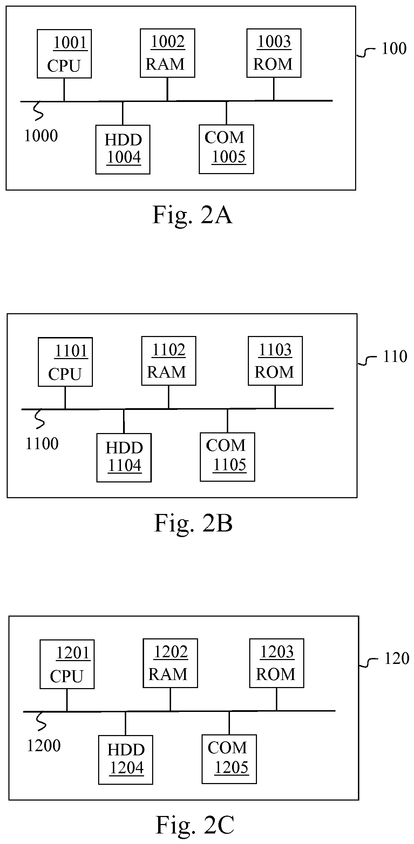

La **Fig. 2A** illustre schématiquement un exemple d'architecture matérielle du module de traitement 100 compris dans le serveur 10.

Selon l'exemple d'architecture matérielle représenté à la Fig. 2A, le module de traitement 100 comprend alors, reliés par un bus de communication 1000 : un processeur ou CPU (« Central Processing Unit » en anglais) 1001 ; une mémoire vive RAM (« Random Access Memory » en anglais) 1002; une mémoire morte ROM (« Read Only Memory » en anglais) 1003 ; une unité de stockage telle qu'un disque dur ou un lecteur de support de stockage, tel qu'un lecteur de cartes SD (« Secure Digital » en anglais) 1004 ; au moins une interface de communication 1005 permettant au module de traitement 100 de communiquer avec d'autres modules ou dispositifs. Par exemple l'interface de communication 1005 permet au module de traitement 100 de communiquer avec d'autres modules du serveur 10 ou avec d'autres dispositifs tels que les macro-passerelles 12A, 12B, 12C et la femto-passerelle 11.

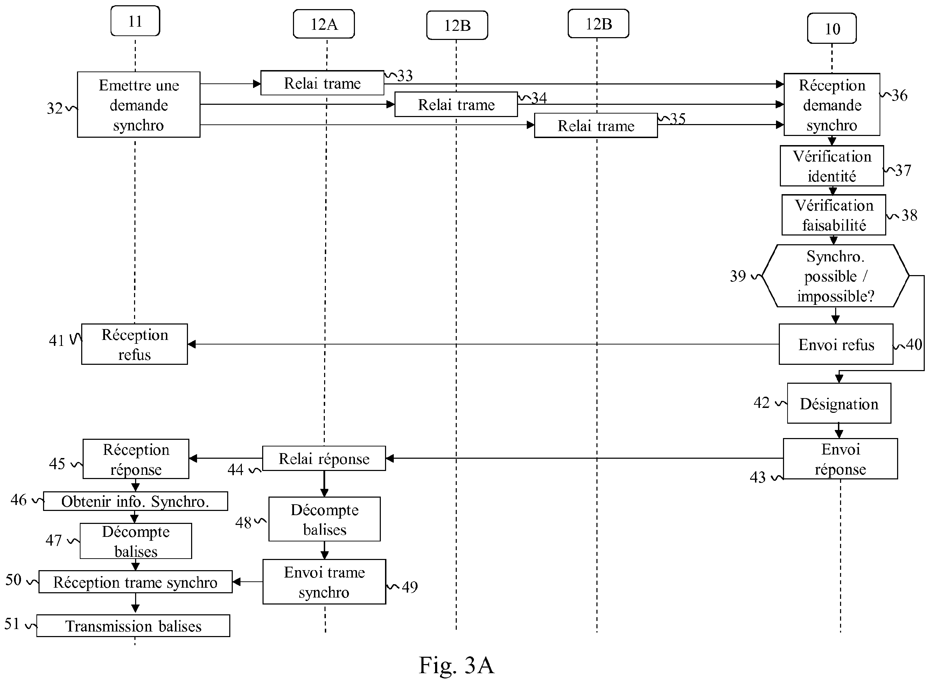

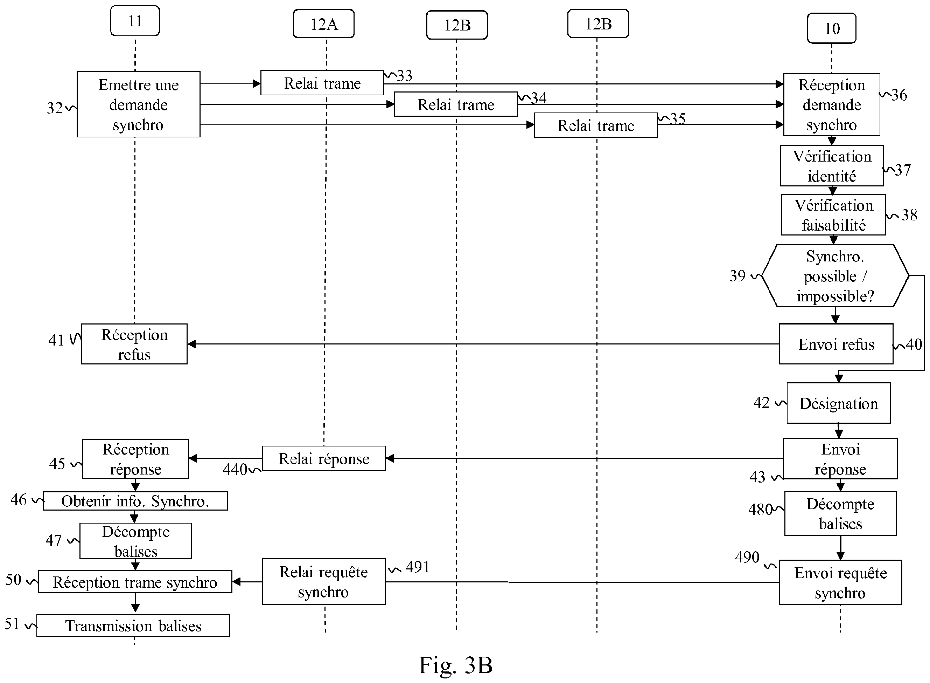

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le serveur 10 est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, des procédés décrits ci-après en relation avec les Figs. 3A et 3B.

La **Fig. 2B** illustre schématiquement un exemple d'architecture matérielle du module de traitement 110 compris dans la femto-passerelle 11.

Selon l'exemple d'architecture matérielle représenté à la Fig. 2B, le module de traitement 110 comprend alors, reliés par un bus de communication 1100 : un processeur ou CPU (« Central Processing Unit » en anglais) 1101 ; une mémoire vive RAM (« Random Access Memory » en anglais) 1102; une mémoire morte ROM (« Read Only Memory » en anglais) 1103 ; une unité de stockage telle qu'un disque dur ou un lecteur de support de stockage, tel qu'un lecteur de cartes SD (« Secure Digital » en anglais) 1104 ; au moins une interface de communication 1105 permettant au module de traitement 110 de communiquer avec d'autres modules ou dispositifs. Par exemple l'interface de communication 1105 permet au module de traitement 110 de communiquer avec le serveur 10, avec les macro-passerelles 12A, 12B et 12C ou avec le terminal 13.

Le processeur 1101 est capable d'exécuter des instructions chargées dans la RAM 1102 à partir de la ROM 1103, d'une mémoire externe (non représentée), d'un support de stockage (tel qu'une carte SD), ou d'un réseau de communication. Lorsque la femto-passerelle 11 est mise sous tension, le processeur 1101 est capable de lire de la RAM 1102 des instructions et de les exécuter. Dans un mode de réalisation, ces instructions forment un programme d'ordinateur causant la mise en œuvre complète ou partielle, par le processeur 1101, des procédés décrits ci-après en relation avec les Figs. 3A et 3B.

La **Fig. 2C** illustre schématiquement un exemple d'architecture matérielle du module de traitement 120 compris dans la macro-passerelle 12A.

Selon l'exemple d'architecture matérielle représenté à la Fig. 2C, le module de traitement 120 comprend alors, reliés par un bus de communication 1200 : un processeur ou CPU (« Central Processing Unit » en anglais) 1201 ; une mémoire vive RAM (« Random Access Memory » en anglais) 1202 ; une mémoire morte ROM (« Read Only Memory » en anglais) 1203 ; une unité de stockage telle qu'un disque dur ou un lecteur de support de stockage, tel qu'un lecteur de cartes SD (« Secure Digital » en anglais) 1204 ; au moins une interface de communication 1205 permettant au module de traitement 120 de communiquer avec d'autres modules ou dispositifs. Par exemple l'interface de communication 1205 permet au module de traitement 120 de communiquer avec le serveur 10, avec la femto-passerelle 11 ou avec le terminal 13.

Le processeur 1201 est capable d'exécuter des instructions chargées dans la RAM 1202 à partir de la ROM 1203, d'une mémoire externe (non représentée), d'un support de stockage (tel qu'une carte SD), ou d'un réseau de communication. Lorsque la macro-passerelle 12A est mise sous tension, le processeur 1201 est capable de lire de la RAM 1202 des instructions et de les exécuter. Dans un mode de réalisation, ces instructions forment un programme d'ordinateur causant la mise en œuvre complète ou partielle, par le processeur 1201, des procédés décrits ci-après en relation avec les Figs. 3A et 3B.

Les procédés décrits en relation avec les Figs. 3A et 3B peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 3A** illustre schématiquement un premier exemple de procédé selon l'invention de synchronisation d'une passerelle ne possédant pas de moyens de synchronisation.

Dans l'exemple de la Fig. 1, ce procédé est appliqué pour synchroniser la femto-passerelle 11 de sorte à permettre à la femto-passerelle 11 de devenir une passerelle de classe B. Dans ce procédé, la femto-passerelle 11, ne possédant pas de moyens de synchronisation, est assistée par une autre passerelle, ici l'une des passerelles 12A, 12B et 12C, possédant des moyens de synchronisation, pour effectuer sa synchronisation.

Dans une étape 32, le module de traitement 110 de la femto-passerelle 11 émet une trame montante à destination du serveur 10 comprenant une demande d'aide à la synchronisation, dite trame de demande d'aide à la synchronisation, par l'intermédiaire des passerelles situées à proximité de la femto-passerelle 11. Pour ce faire, la femto-passerelle 11 se fait temporairement passer pour un terminal. La trame de demande d'aide à la synchronisation est émise en mode multidiffusion.

Lors d'étapes 33, 34 et 35, une copie de la trame de demande d'aide à la synchronisation est reçue par chaque passerelle à portée de la femto-passerelle 11, ici les macro-passerelles 12A, 12B et 12C. Lors des étapes 33, 34 et 35, le contenu de la trame de demande d'aide à la synchronisation est insérée par chaque passerelle ayant reçu ladite trame dans une requête HTTP montante destinée au serveur 10. Chaque passerelle ayant reçu la trame de demande d'aide à la synchronisation transmet ensuite une requête HTTP montante, contenant la demande d'aide à la synchronisation, au serveur 10.

Une demande d'aide à la synchronisation émise à l'étape 32 comprend un identifiant unique *AddID* permettant au serveur 10 de déterminer quelle passerelle a fait la demande d'aide à la synchronisation. L'identifiant unique *AddID* est similaire à une adresse. On considère donc par la suite que l'identifiant unique *AddID* représente une adresse, dite adresse de synchronisation. Dans l'exemple de la Fig. 1, la demande d'aide à la synchronisation comprend un identifiant unique *AddID* de la femto-passerelle 11. Le serveur 10 est supposé pouvoir associer de manière unique un identifiant unique *AddID,* qu'il recevrait par le biais de la trame d'aide à la synchronisation, à la passerelle du réseau LoRa 1 qui insèrerait dans la dite trame d'aide à la synchronisation ledit identifiant unique *AddID.* Dans un mode de réalisation, chaque passerelle du réseau LoRa 1 obtient un identifiant unique *AddID* lors de son installation dans le réseau LoRa 1.

Dans un mode de réalisation, la demande d'aide à la synchronisation comprend une information représentative d'une sous-période *PS* (« Ping Slot » en terminologie anglo-saxonne) d'une période de communication au cours de laquelle la femto-passerelle 11 souhaite qu'une autre passerelle lui transmette une trame de synchronisation. On note que la sous-période *PS* utilisée pour transmettre une trame de synchronisation est située à une position fixe dans une période de communication. De préférence, la sous-période *PS* utilisée pour transmettre une trame de synchronisation est située à proximité de la balise suivant la période de communication comprenant ladite sous-période *PS.* Par exemple, ladite sous-période *PS* est la dernière sous-période de la période de communication située juste avant l'émission de la balise suivant la période de communication comprenant ladite sous-période *PS.* En prenant une sous-période *PS* située de préférence peu avant l'émission de la balise, on limite des risques de dérive d'horloge de la femto-passerelle 11 pendant la période de communication suivant ladite balise. Nous décrivons les trames de synchronisation par la suite.

Dans un mode de réalisation, suite à l'émission de la trame de demande d'aide à la synchronisation, la femto-passerelle 11 démarre un compteur de temps. Si aucune réponse à la trame de demande d'aide à la synchronisation n'est reçue après une durée prédéfinie *timeout,* la femto-passerelle 11 peut décider de renouveler sa demande d'aide à la synchronisation en émettant une nouvelle trame de demande d'aide à la synchronisation. Par ailleurs, par exemple, si, après un nombre *Nᵣ* (*Nᵣ* étant un nombre entier supérieur à « 0 ») de renouvellements de demande d'aide à la synchronisation, aucune réponse à ladite demande n'est reçue, la femto-passerelle 11 met fin à ses demandes d'aide à la synchronisation. La femto-passerelle est alors dans l'impossibilité de fonctionner en mode de communication de classe B.

Lors d'une étape 36, le serveur 10 reçoit une pluralité de requêtes HTTP montantes contenant chacune une même demande d'aide à la synchronisation formulée par la femto-passerelle 11 et relayée par les macro-passerelles 12A, 12B et 12C.

Dans une étape 37, le module de traitement 100 vérifie que la demande d'aide à la synchronisation émane bien d'une passerelle du réseau LoRa 1 en utilisant l'identifiant unique *AddID* contenu dans ladite demande. L'étape 37 est optionnelle puisqu'elle n'est mise en œuvre que lorsqu'il existe un risque pour qu'une trame de demande d'aide à la synchronisation émanant d'une passerelle d'un autre réseau LoRa que le réseau LoRa 1 soit reçue par une passerelle du réseau LoRa 1.

Dans une étape 38, le module de traitement 100 vérifie une faisabilité de l'aide à la synchronisation. Pour ce faire, le module de traitement 100 vérifie si au moins une passerelle, parmi les passerelles du réseau LoRa 1 ayant relayé la demande d'aide à la synchronisation, est susceptible d'aider la femto-passerelle 11 à se synchroniser. Il est nécessaire en effet, pour qu'une première passerelle puisse aider à la synchronisation d'une seconde passerelle, que la première passerelle soit équipée de moyens de synchronisation tels qu'un module GPS. On suppose ici que chaque passerelle équipée de moyens de synchronisation a transmis cette information au serveur 10. Le module de traitement 100 est donc capable de déterminer quelle passerelle, parmi les macro-passerelles 12A, 12B et 12C, est équipée de moyens de synchronisation. Par ailleurs, le module de traitement 100 sait quelles passerelles du réseau LoRa 1 sont à portée de la femto-passerelle 11. En effet, les passerelles qui sont à portée sont les passerelles ayant relayé la demande d'aide à la synchronisation, *i.e.* les macro-passerelles 12A, 12B et 12C dans le cas de l'exemple de la Fig. 1. Si au moins une des passerelles ayant relayé la demande d'aide à la synchronisation est équipée de moyens de synchronisation, le module de traitement 100 considère que l'aide à la synchronisation est possible. Sinon, l'aide à la synchronisation est impossible.

Dans une étape 39, le module de traitement 100 décide d'accepter ou de refuser et envoie un message à la femto-passerelle 11 comprenant une information représentative de cette décision.

Lorsque l'aide à la synchronisation est impossible, la décision prise par le module de traitement est un refus. Dans ce cas, le message envoyé à la femto-passerelle 11 est un message de refus. Le message de refus est par exemple une requête HTTP descendante comprenant une information représentative du refus. Ce message est envoyé lors d'une étape 40 sur le lien 15D.

Dans une étape 41, le module de traitement 110 de la femto-passerelle 11 reçoit le message de refus et met fin à sa tentative de synchronisation.

Lorsque l'aide à la synchronisation est possible, le module de traitement 100 autorise l'aide à la synchronisation. Dans ce cas, lors d'une étape 42, le module de traitement 100 désigne l'une des macro-passerelles 12A, 12B ou 12C pour relayer des informations représentatives d'une réponse à la demande d'aide à la synchronisation. Par exemple, chaque requête HTTP montante contient une information représentative d'une qualité de réception de la trame de demande d'aide à la synchronisation par la passerelle ayant transmis ladite requête HTTP montante. Le module de traitement 100 désigne par exemple, la passerelle ayant reçu la trame de demande d'aide à la synchronisation avec la meilleure qualité. Dans l'exemple de la Fig. 1, la macro-passerelle 12A est désignée par le module de traitement 100. Dans un mode de réalisation, la passerelle désignée pour répondre à la demande d'aide à la synchronisation est aussi la passerelle qui fournit l'aide à la synchronisation.

Dans une étape 43, le module de traitement 100 transmet une requête HTTP descendante comprenant des informations représentatives d'une réponse à la demande d'aide à la synchronisation à la macro-passerelle 12A. Les informations représentatives d'une réponse comprennent l'identifiant unique *AddID* de la passerelle ayant demandé l'aide à la synchronisation, ici la femto-passerelle 11. Comme nous le décrivons par la suite, les informations représentatives d'une réponse transmise dans la requête HTTP descendante à la macro-passerelle 12A, permettent de mettre en place une transmission d'au moins une trame de synchronisation par la macro-passerelle 12A à destination de la femto-passerelle 11 dans la sous-période *PS* d'au moins une période de communication, permettant ainsi à la femto-passerelle 11 de déterminer des instants d'émission de balises synchronisés avec les instants d'émission de balises de chaque passerelle de classe B du réseau LoRa 1.

Dans un mode de réalisation, les informations représentatives d'une réponse comprennent en outre une information représentative de la sous-période *PS* devant être utilisée pour transmettre une trame de synchronisation si cette sous-période *PS* n'est pas la même que celle proposée par le module de traitement 110 de la femto-passerelle 11 dans la trame de demande d'aide à la synchronisation.

Dans un mode de réalisation, les informations représentatives d'une réponse comprennent en outre une adresse de synchronisation, représentée par un identifiant, dit identifiant global, *PingAddID* qui est une adresse utilisée dans les trames d'aide à la synchronisation comme adresse de destination, l'identifiant global *PingAddID* pouvant être différent de l'identifiant unique *AddID* utilisé par la femto-passerelle 11 lors de sa demande d'aide à la synchronisation lors de l'étape 32. Ceci peut être particulièrement utile par exemple si un procédé d'aide à la synchronisation est déjà mis en place par le serveur 10 pour une seconde femto-passerelle (non représentée sur la Fig. 3A) à travers une des macro-passerelles se trouvant au voisinage de la femto-passerelle 11. La connaissance de l'identifiant global *PingAddID* utilisée dans les trames de synchronisation à destination de la seconde femto-passerelle permet à la femto-passerelle 11 de pouvoir les exploiter sans que de nouvelles trames de synchronisation soient spécifiquement générées pour la femto-passerelle 11 avec son identifiant unique *AddID.* De cette manière, une pluralité de passerelles (ici la femto-passerelle 11 et au moins une autre femto-passerelle) peut se synchroniser avec l'aide d'une même passerelle (ici la macro-passerelle 12A) en utilisant la même trame de synchronisation. L'identifiant global *PingAddID* est donc une information permettant à une pluralité de passerelles de déterminer au moins un prochain instant d'émission d'une balise par chaque passerelle de classe B dudit réseau LoRa 1 et de transmettre une balise à chaque prochain instant d'émission déterminé. Dans un mode de réalisation, lorsque la seconde femto-passerelle reçoit déjà des trames de synchronisation ayant pour adresse de destination son identifiant unique *AddID* égal à une valeur *AddID_FT2,* il peut être judicieux d'utiliser ces mêmes trames pour aider à la synchronisation la femto-passerelle 11. Ceci se fait en fixant l'identifiant global *PingAddID* à la valeur *AddID_FT2* de l'identifiant unique *AddID* de la seconde femto-passerelle dans la réponse à la demande d'aide à la synchronisation de la femto-passerelle 11. De cette manière on évite de réserver des valeurs d'identifiant global *PingAddID* en plus des valeurs d'identifiant unique *AddID.*

Dans une étape 44, la requête HTTP descendante contenant les informations représentatives d'une réponse à la demande d'aide à la synchronisation est reçue par la macro-passerelle 12A. Ladite réponse permet à la macro-passerelle 12A de déterminer dans quelle sous-période *PS* d'au moins une période de communication la macro-passerelle 12A doit transmettre une trame de synchronisation et à quel destinataire : soit à l'adresse de synchronisation représentée par l'identifiant unique *AddID* si l'identifiant global *PingAddID* n'est pas présent dans les informations représentatives d'une réponse à la demande d'aide à la synchronisation, soit à l'adresse de synchronisation représentée par l'identifiant global *PingAddID* si l'identifiant global *PingAddID* est présent dans les informations représentatives d'une réponse à la demande d'aide à la synchronisation. La macro-passerelle 12A extrait lesdites informations et les insère dans une trame descendante destinée à la passerelle correspondant à l'identifiant unique *AddID, i.e.* la femto-passerelle 11. Ladite trame descendante est transmise en mode multidiffusion.

Dans une étape 45, le module de traitement 110 de la femto-passerelle 11 reçoit la trame descendante comprenant les informations représentatives d'une réponse à la trame de demande d'aide à la synchronisation en provenance de la macro-passerelle 12A. La réception de la trame descendante permet à la femto-passerelle 11, par l'intermédiaire de son module de traitement 110, de déterminer au moins une période de communication au cours de laquelle la femto-passerelle 11 doit recevoir une trame de synchronisation en provenance de la macro-passerelle 12A. Par exemple, la réception de la trame descendante indique à la sous-passerelle 11, qu'après réception d'un nombre *N_{B}* de balises, la femto-passerelle 11 va recevoir au moins une trame de synchronisation, en provenance de la macro-passerelle 12A dans la période de transmission suivant la réception du nombre *N_{B}* de balises. La femto-passerelle 11 utilise alors chaque trame de synchronisation reçue pour se synchroniser. Chaque trame de synchronisation est reçue dans une sous-période *PS* d'une période de communication correspondant soit à la sous-période *PS* indiquée dans la trame de demande d'aide à la synchronisation, soit à la sous-période *PS* indiquée dans la trame descendante comprenant les informations représentatives d'une réponse à la demande d'aide à la synchronisation. Dans un mode de réalisation, le nombre de balises *N_{B}* est prédéfini et connu de chaque passerelle du réseau LoRa 1. Dans un mode de réalisation, le nombre de balises *N_{B}* = 1, c'est-à-dire que la période de communication suivant la prochaine balise reçue comprend une sous-période *PS* dans laquelle est transmise une trame de synchronisation. Dans un mode de réalisation, le nombre de balises *N_{B}* = 5.

Dans une mode de réalisation, le nombre de balises *N_{B}* fait partie des informations représentatives d'une réponse à la demande d'aide à la synchronisation. Ce nombre de balises *N_{B}* est donc reçu dans la trame descendante comprenant les informations représentatives d'une réponse à la demande d'aide à la synchronisation.

Dans une étape 46, le module de traitement 110 obtient l'information représentative de la sous-période *PS* utilisée par la macro-passerelle 12A pour transmettre la trame de synchronisation. Cette information est soit connue du module de traitement 110 puisque c'est lui qui l'a définie lors de l'étape 32, soit extraite de la trame descendante comprenant les informations représentatives d'une réponse à la trame de demande d'aide à la synchronisation reçue lors de l'étape 45.

Dans le mode de réalisation où un identifiant global *PingAddID* est inclus dans les informations représentatives d'une réponse à la trame de demande d'aide à la synchronisation, le module de traitement 110 utilise les trames de synchronisation dont l'adresse de destination comporte l'identifiant global *PingAddID* et non l'identifiant unique *AddID* pour se synchroniser.

Dans une étape 47, le module de traitement 110 démarre un compteur, et compte le nombre de balises reçues suite à la réception de la trame descendante comprenant les informations représentatives d'une réponse à la demande d'aide à la synchronisation.

Simultanément à l'étape 47, suite à l'envoi de la trame descendante comprenant les informations représentatives d'une réponse à la demande d'aide à la synchronisation, le module de traitement 120 de la macro-passerelle 12A démarre, lors d'une étape 48, un compteur, et compte le nombre de balises émises suite à la transmission de ladite trame descendante. Lorsque le nombre de balises émises atteint le nombre de balises *N_{B},* le module de traitement 120 passe à une étape 49 au cours de laquelle il transmet une trame de synchronisation dans la sous-période *PS* de la prochaine période de communication. Si, précédemment à la réception de la dernière requête HTTP descendante contenant des informations représentatives d'une réponse à la demande d'aide à la synchronisation, le module de traitement 120 de la macro-passerelle 12A a reçu une autre requête HTTP descendante contenant des informations représentatives d'une réponse à une demande d'aide à la synchronisation, le module de traitement 120 prend en compte les informations représentatives d'une réponse contenues dans la dernière requête HTTP descendante reçue si ces informations sont différentes entre les deux requêtes HTTP descendantes.

Lorsque le nombre de balises reçues par la femto-passerelle 11 atteint le nombre de balises *N_{B},* le module de traitement 110 de la femto-passerelle 11 passe à une étape 50. La femto-passerelle 11 s'attend alors à recevoir une trame de synchronisation dans la sous-période *PS* de la prochaine période de communication. Lors de l'étape 50, le module de traitement 110 reçoit la trame de synchronisation. Le module de traitement 110 sait alors que cette trame de synchronisation a été reçue lors d'une sous-période *PS.* De par ses connaissances du protocole LoRaWAN, le module de traitement 110 connait l'écart prédéfini entre la sous-période PS et la prochaine balise émise par chaque passerelle de classe B du réseau LoRa 1 (les macro-passerelles 12A, 12B et 12C). A partir de l'instant de réception de la trame de synchronisation et de l'écart prédéfini, le module de traitement 110 détermine au moins le prochain instant d'émission d'une balise par chaque passerelle de classe B du réseau LoRa 1 (ici les macro-passerelles 12A, 12B et 12C). Le module de traitement 110 connaissant la période des balises dans le réseau LoRa 1 peut alors synchroniser ses propres émissions de balises avec les émissions de balises des autres passerelles de classe B du réseau LoRa 1 (ici les macro-passerelles 12A, 12B et 12C). Si la femto-passerelle comprend une horloge fiable, alors une seule réception d'une trame de synchronisation suffit pour synchroniser les émissions de balises de la femto-passerelle 11. Si l'horloge de la femto-passerelle n'est pas suffisamment fiable alors les émissions de balises doivent être synchronisées régulièrement pour compenser des dérives de l'horloge de la femto-passerelle 11.

Suite à la réception de la trame de synchronisation lors de l'étape 50, dans une étape 51, le module de traitement 110 transmet une balise à chaque instant d'émission déterminé lors de l'étape 50. En d'autres termes, le module de traitement 110 transmet au moins une balise synchronisée avec les balises transmises (non représentées Fig. 3A) par les autres passerelles de classe B du réseau LoRa 1.

Dans mode de réalisation, une pluralité de trames de synchronisation est transmise avec une périodicité *P* prédéterminée. La femto-passerelle 11 peut ainsi se resynchroniser à chaque réception d'une trame de synchronisation (répétition des étapes 49, 50 et 51). La périodicité *P* est par exemple une périodicité par défaut connue de chaque passerelle du réseau LoRa 1. Dans un mode de réalisation, la périodicité *P* est définie par la femto-passerelle 11 et une information représentative de cette périodicité est transmise en direction du serveur 10 dans les trames de demande d'aide à la synchronisation. Le serveur 10 transmet ensuite l'information représentative de la périodicité à la passerelle du réseau 1 désignée pour aider la femto-passerelle 11 à se synchroniser. Dans un mode de réalisation, la périodicité *P* est définie par le serveur 10 qui transmet une information représentative de la périodicité *P* à la passerelle du réseau 1 désignée pour aider la femto-passerelle 11 à se synchroniser et à la femto-passerelle 11.

Dans un mode de réalisation, la trame de synchronisation contient l'identifiant unique *AddID* de la passerelle à qui elle est destinée, ici la femto-passerelle 11, si l'identifiant global *PingAddID* n'est pas présent dans les informations représentatives d'une réponse à la demande d'aide à la synchronisation. Dans un mode de réalisation, la trame de synchronisation contient l'identifiant global *PingAddID* comme adresse de destination si ledit identifiant global *PingAddID* est présent dans les informations représentatives d'une réponse à la demande d'aide à la synchronisation.

Dans un mode de réalisation, la trame de synchronisation contient en outre une information représentative d'un instant auquel la trame de synchronisation a été émise par la macro-passerelle 12A. L'instant auquel la trame de synchronisation a été émise permet à la femto-passerelle 11 de calculer un temps de propagation de la trame entre la macro-passerelle 12A et la femto-passerelle 11, et de prendre en compte ce temps de propagation lors de la synchronisation. De cette manière, la synchronisation est fiabilisée.

Il est connu que dans un réseau LoRa, une sous-période d'une période de communication attribuée à un terminal de classe B classique change de manière déterministe entre deux émissions de balises. Dans un mode de réalisation, lorsque la sous-période *PS* utilisée pour transmettre la trame de synchronisation coïncide avec une sous-période attribuée pour d'autres communications par le biais de la passerelle devant émettre la trame de synchronisation, ici la macro-passerelle 12A, le module de traitement 100 du serveur 10 désigne, temporairement ou définitivement, une autre passerelle du réseau LoRa 1 à portée de la femto-passerelle 11 pour émettre les trames de synchronisation.

Dans un mode de réalisation, l'aide à la synchronisation est accordée, *i.e.* le procédé de synchronisation décrit en relation avec la Fig. 3A est mis en œuvre, pendant une durée *D.* Pendant la durée *D,* la femto-passerelle 11 transmet des balises et synchronise ses transmissions de balises avec chaque trame de synchronisation qu'elle reçoit. Dans un mode de réalisation, pendant la durée *D,* la macro-passerelle 12A transmet périodiquement une trame de synchronisation avec la périodicité *P.* Dans un mode de réalisation, la durée *D* est une durée par défaut connue par chaque passerelle du réseau LoRa 1. Par exemple, la durée *D* peut être égale à « 24 » heures ou infinie. Dans un mode de réalisation, la durée *D* est fixée par le serveur 10 et reçue par le module de traitement 110 de la femto-passerelle 11 dans la réponse à la demande d'aide à la synchronisation lors de l'étape 45. Pour ce faire, le serveur 10 peut analyser un trafic dû au terminaux de classe B dans une zone géographique comprenant la femto-passerelle 11 et repérer des périodes d'affluence (*i.e.* périodes de surcharge du réseau LoRa 1) régulières durant lesquelles les macro-passerelles 12A, 12B et 12C sont surchargées. La femto-passerelle 11 peut alors être mise à contribution pour soulager les macro-passerelles 12A, 12B et 12C. La durée *D* peut alors être définie en fonction de ces périodes d'affluence. Dans un mode de réalisation, à la fin de la durée *D,* la femto-passerelle 11 renouvelle sa demande d'aide à la synchronisation si nécessaire, en relançant le procédé décrit en relation avec la Fig. 3A. Dans un autre mode de réalisation alternatif au précédent, c'est le serveur 10 qui est à l'initiative du renouvellement de l'aide à la synchronisation. Dans ce cas, le module de traitement 100 du serveur 10 reprend le procédé décrit en relation avec la Fig. 3A à partir de l'étape 43 et les étapes 44 à 51 sont mises en œuvre.

Dans un mode de réalisation, une fois que l'aide à la synchronisation a démarré, le module de traitement 100 du serveur 10 observe des communications de terminaux utilisant la femto-passerelle 11. En cas de fonctionnement anormal de ces communications, le module de traitement 100 du serveur 10 met fin à l'aide à la synchronisation sans attendre la fin de la durée *D.* Un fonctionnement anormal se caractérise par exemple par un nombre de répétitions de trames transitant par la femto-passerelle 11 supérieur à un seuil prédéfini. Le module de traitement 100 du serveur 10 informe la femto-passerelle 11 de la fin de l'aide à la synchronisation par exemple, en lui envoyant une requête HTTP descendante contenant une information signifiant la fin de l'aide à la synchronisation ou en demandant à une autre passerelle du réseau LoRa 1 de transmettre à la femto-passerelle 11 une trame contenant une information signifiant la fin de l'aide à la synchronisation.

Dans un mode de réalisation, les trames de demande d'aide à la synchronisation, les trames de réponse à une demande d'aide à la synchronisation et les trames de synchronisation sont des trames dédiées à l'aide à la synchronisation qui viennent compléter des trames existantes définies dans le protocole LoRaWAN.

Dans un mode de réalisation, les trames de demande d'aide à la synchronisation, les trames de réponse à une demande d'aide à la synchronisation et les trames de synchronisation sont des trames existantes dans le protocole LoRaWAN dans lesquelles de nouveaux champs sont insérés pour transporter des informations et/ou des données échangées lors de la mise en œuvre du procédé de synchronisation décrit en relation avec la Fig. 3A.

Dans un mode de réalisation, les trames de demande d'aide à la synchronisation, les trames de réponse à une demande d'aide à la synchronisation et les trames de synchronisation sont des trames existantes dans le protocole LoRaWAN dans lesquelles des champs non utilisés par le protocole LoRaWAN sont utilisés pour transporter des informations et/ou des données échangées lors de la mise en œuvre du procédé de synchronisation décrit en relation avec la Fig. 3A.

Nous avons vu plus haut que lors des étapes 40 et 41, le message de refus mettait définitivement fin au procédé d'aide à la synchronisation. Dans un mode de réalisation alternatif, le message de refus invite la femto-passerelle 11 à renouveler plus tard sa transmission d'une trame de demande d'aide à la synchronisation. Dans ce cas, après une période d'attente, par exemple prédéfinie, suite à la réception du message de refus, la femto-passerelle 11 met de nouveau en œuvre l'étape 32 en transmettant une nouvelle trame de demande d'aide à la synchronisation.

Dans un mode de réalisation, préalablement à la mise en œuvre de l'étape 32, le module de traitement 110 de la femto-passerelle 11 transmet une première demande d'aide à la synchronisation, dite demande d'aide à la synchronisation préliminaire, par l'intermédiaire du lien 15D sans passer par les macro-passerelles 12A, 12B et 12C. Cette demande d'aide à la synchronisation préliminaire est transmise par exemple sous forme de requête HTTP montante contenant les mêmes informations que celles transmises lors des étapes 33, 34 et 35. Lorsqu'il reçoit cette requête HTTP montante, le module de traitement 100 du serveur 10 met en œuvre une procédure de prétraitement permettant au serveur 10 de déterminer si la femto-passerelle 11 peut être autorisée à émettre une trame de demande d'aide à la synchronisation. Lors de cette procédure de prétraitement, le module de traitement 100 analyse, par exemple, une charge du réseau LoRa 1 dans une zone géographique englobant la femto-passerelle 11. Si la charge du réseau LoRa 1 due aux terminaux de classe B est supérieure à un niveau de charge prédéfini, le module de traitement 100 décide d'autoriser la femto-passerelle 11 à lancer la mise en œuvre du procédé de synchronisation décrit en relation avec la Fig. 3A. Pour ce faire, le module de traitement 100 transmet une requête HTTP descendante à la femto-passerelle 11, lui indiquant qu'elle est autorisée à émettre une trame de demande d'aide à la synchronisation. Suite à la réception de cette requête HTTP descendante, le module de traitement 110 de la femto-passerelle 11 met en œuvre l'étape 32. Si la charge du réseau LoRa 1 due aux terminaux de classe B est inférieure ou égale au niveau de charge prédéfini, le module de traitement 100 envoie un message de refus à la femto-passerelle 11. Comme décrit plus haut, ce message de refus peut être un refus définitif ou une invitation à renouveler la demande d'aide à la synchronisation à une date ultérieure. La date ultérieure peut être prédéterminée et connue de chaque passerelle du réseau LoRa 1, définie par la femto-passerelle 11 ou définie par le module de traitement 100 du serveur 10 et transmise dans le message de refus. Dans un mode de réalisation, plutôt que de laisser la femto-passerelle 11 renouveler à une date ultérieure une demande d'aide à la synchronisation, le module de traitement 100 décide, lorsque la charge du réseau LoRa est inférieure ou égale au niveau de charge prédéfini, de prendre en considération la demande de la femto-passerelle 11. Si, après une période donnée, le module de traitement 100 constate que la charge du réseau LoRa 1 dans la zone géographique englobant la femto-passerelle 11 dépasse le niveau de charge prédéfini, il autorise la femto-passerelle 11 à mettre en œuvre l'étape 32.

Dans un mode de réalisation, la femto-passerelle 11 utilise la transmission d'une demande d'aide à la synchronisation préliminaire pour obtenir un renouvellement de la durée D si celle-ci n'est pas infinie. Un avantage de ce mode de réalisation est que le renouvellement de la durée *D* n'est accordé par le serveur 10 que si la procédure de prétraitement l'autorise. De cette manière, la mise en œuvre de la procédure d'aide à la synchronisation n'est renouvelée que si la charge du réseau LoRa 1 le justifie.

Jusque-là, le lancement de la procédure d'aide à la synchronisation a toujours été à l'initiative de la femto-passerelle 11. Dans un mode de réalisation, le serveur 10 décide de lui-même, sans réception préalable d'une demande d'aide à la synchronisation, d'aider la femto-passerelle 11 à se synchroniser afin que la femto-passerelle 11 puisse fonctionner en mode de communication de classe B. Ce mode de réalisation est, par exemple, mis en œuvre lorsque, après analyse de la charge du réseau LoRa 1 due aux terminaux de classe B, le serveur 10 constate que le réseau LoRa 1 est surchargé dans une zone géographique englobant la femto-passerelle 11. Pour ce faire le serveur 10, par l'intermédiaire de son module de traitement 100, envoie une demande de mise en œuvre de l'étape 32 à la femto-passerelle 11. Cette demande est par exemple transmise sous forme d'une requête HTTP descendante, comprenant une information représentative d'une demande de lancement du procédé de synchronisation, transmise à la femto-passerelle 11 en utilisant le lien 15D. Suite à la réception de cette requête HTTP descendante, le module de traitement 110 de la femto-passerelle 11 met en œuvre l'étape 32.

Dans un mode de réalisation, la femto-passerelle 11 ne possède pas de manière permanente un identifiant unique *AddID.* L'identifiant unique est attribué à la passerelle 11 par le module de traitement 100 du serveur 10, soit lors de la transmission de la demande de lancement du procédé d'aide à la synchronisation (l'identifiant unique *AddID* est alors compris dans la requête HTTP descendante comprenant l'information représentative d'une demande de lancement du procédé d'aide à la synchronisation), soit lors de la transmission de la requête HTTP descendante indiquant à la femto-passerelle 11 qu'elle est autorisée à mettre en œuvre le procédé d'aide à la synchronisation (*i.e.* suite à la réception par le serveur 10 d'une demande d'aide à la synchronisation préliminaire).

Dans un mode de réalisation, ce n'est pas la femto-passerelle 11 qui définit la sous-période *PS.* Dans ce cas, la trame de demande d'aide à la synchronisation émise par la sous-passerelle 11 ne comprend pas cette information. C'est alors le module de traitement 100 du serveur 10 qui définit la sous-période *PS.* Le module de traitement 100 transmet alors une information représentative de la sous-période *PS* dans la requête HTTP descendante comprenant des informations représentatives d'une réponse à la demande d'aide à la synchronisation transmise à la macro-passerelle 12A, lesdites informations étant destinées à la femto-passerelle 11.

Dans un mode de réalisation, avant d'émettre la trame de demande d'aide à la synchronisation lors de l'étape 32, la femto-passerelle 11 vérifie si d'autres passerelles sont à portée pour recevoir ladite trame de demande d'aide à la synchronisation et pour lui transmettre des trames de synchronisation. Une telle vérification peut s'appuyer sur une analyse des balises reçues par la femto-passerelle 11. Une réception de balise signifie qu'au moins une passerelle est à portée de la femto-passerelle 11. Si aucune passerelle n'est à portée, la femto-passerelle 11 ne met pas en œuvre le procédé décrit en relation avec la Fig. 3A.

La Fig. 3B illustre schématiquement un deuxième exemple de procédé selon l'invention de synchronisation d'une passerelle ne possédant pas de moyens de synchronisation.

Le procédé décrit en relation avec la Fig. 3B est très similaire au procédé décrit en relation avec la Fig. 3A et peut remplacer le procédé décrit en relation avec la Fig. 3A. Les étapes 32 à 43, 45 à 47, 50 et 51 restent identiques. L'étape 44 est remplacée par une étape 440 mise en œuvre par la macro-passerelle 12A. L'étape 48, mise en œuvre par la macro-passerelle 12A est remplacée par une étape 480 mise en œuvre par le serveur 10. L'étape 49 mise en œuvre par la macro-passerelle 12A est remplacée par une étape 490 mise en œuvre par le serveur 10 et par une étape 491 mise en œuvre par la macro-passerelle 12A.

Dans le procédé décrit en relation avec la Fig. 3B, le serveur 10 transmet une requête HTTP descendante à la macro-passerelle 12A pour chaque trame de synchronisation. C'est donc le serveur 10 qui contrôle intégralement l'émission des trames de synchronisation. Dans ce procédé, la macro-passerelle 12A sert uniquement à relayer les requêtes HTTP descendantes en provenance du serveur 10 vers un destinataire du réseau LoRa 1 sans se soucier du contenu des dites requêtes (fonctionnement classique d'une passerelle d'un réseau LoRa). Par défaut toute requête HTTP descendante contient toutes les informations nécessaires à la macro-passerelle 12A afin de former une trame à émettre à un instant déterminé par le serveur 10.

Lors de l'étape 440, la requête HTTP descendante contenant les informations représentatives d'une réponse à la demande d'aide à la synchronisation est reçue par la macro-passerelle 12A. La macro-passerelle 12A extrait lesdites informations et les insère dans une trame descendante destinée à la passerelle correspondant à l'identifiant unique *AddID, i.e.* la femto-passerelle 11, ou destinée à chaque passerelle identifiée par l'identifiant global *PingAddID.* Ladite trame descendante est transmise en mode multidiffusion. A la différence de l'étape 44, lors de l'étape 440, la macro-passerelle 12A ne détermine pas dans quelle sous-période *PS* d'au moins une période de communication ladite macro-passerelle 12A doit transmettre une trame de synchronisation et à quel destinataire (*AddID* ou *PingAddID*)*.* Dans le procédé décrit en relation avec la Fig. 3B, la femto-passerelle 11 reçoit la trame descendante contenant les informations représentatives d'une réponse à la demande d'aide à la synchronisation lors de l'étape 45 déjà expliquée.

Suite à l'envoi de la requête HTTP descendante comprenant les informations représentatives d'une réponse à la demande d'aide à la synchronisation, le module de traitement 100 du serveur 10 démarre, lors de l'étape 480, un compteur, et compte le nombre de balises émises suite à la transmission de ladite requête HTTP descendante. Lorsque le nombre de balises émises atteint le nombre de balises *N_{B},* le module de traitement 100 passe à l'étape 490 au cours de laquelle, il transmet une requête HTTP descendante contenant des informations représentatives de l'émission d'une trame de synchronisation pendant la sous-période *PS* de la prochaine période de communication. Cette requête HTTP descendante permet de déclencher lors de l'étape 491 un envoi par la macro-passerelle 12A d'une trame de synchronisation dans la sous-période *PS* de la prochaine période de communication. La femto-passerelle 11 met en œuvre l'étape 50 suite à la réception de la trame de synchronisation. L'étape 490 est répétée pendant la durée *D.*

Dans le cas où la sous-période *PS* coïncide avec une sous-période attribuée à la macro-passerelle 12A pour communiquer une autre trame, dite trame classique, que la trame de synchronisation (une trame comprenant des données applicatives ou des informations de contrôle), le serveur 10 peut demander à la macro-passerelle 12A de privilégier l'envoi de la trame classique. Toutefois, la femto-passerelle 11 s'attendant, suite à la réception de la trame de réponse à la demande de synchronisation, à recevoir une trame de synchronisation dans la sous-période *PS,* elle utilise la trame classique comme une trame de synchronisation pour effectuer la synchronisation de ses envois de balises.

Dans ce mode de réalisation, le serveur 10 contrôle finement la durée de l'aide à la synchronisation en contrôlant quand il envoie des requêtes HTTP descendantes permettant de déclencher l'émission, par la macro-passerelle 12A, de trames de synchronisation.

## Revendications

1. Procédé de synchronisation d'une passerelle (11) d'un réseau (1) sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau (1) supportant ledit mode, dites passerelles de classe B, les émissions de balises étant synchronisées entre chaque passerelle de classe B, chaque période de communication étant divisée en un nombre prédéfini de sous-périodes, un terminal (13) du réseau (1) fonctionnant suivant ledit mode ne pouvant communiquer de manière bidirectionnelle avec un serveur (10) par l'intermédiaire d'une passerelle de classe B que pendant une sous-période qui lui a été allouée, le procédé étant **caractérisé en ce qu'**il comprend, lorsqu'il est mis en œuvre par une première passerelle (11) :
émettre (32) à destination dudit serveur (10), par l'intermédiaire d'au moins une seconde passerelle dudit réseau (1), une première trame comprenant une demande d'aide à la synchronisation;
recevoir (45) une deuxième trame comprenant des informations représentatives d'une réponse à ladite demande en provenance d'une passerelle dudit réseau (1), dite passerelle désignée, équipée de moyens de synchronisation, la passerelle désignée ayant été désignée par le serveur (10) parmi les au moins une seconde passerelle, la réception de ladite deuxième trame permettant à la première passerelle (11) de déterminer au moins une période de communication au cours de laquelle la première passerelle (11) doit recevoir une troisième trame, dite trame de synchronisation, en provenance de la passerelle désignée;
obtenir (46) des informations représentatives d'une sous-période de chaque période de communication déterminée utilisée par la passerelle désignée pour transmettre une trame de synchronisation, ladite sous-période ayant un écart prédéfini avec une balise suivant directement la période de communication ;
recevoir (50) au moins une trame de synchronisation ; et,
pour chaque trame de synchronisation reçue : déterminer (50) à partir d'un instant de réception de ladite trame de synchronisation et de l'écart prédéfini, au moins un prochain instant d'émission d'une balise par chaque passerelle de classe B dudit réseau (1) ; et, transmettre (51) une balise à chaque prochain instant d'émission déterminé.

2. Procédé selon la revendication 1, **caractérisé en ce que**, avant d'émettre la première trame comprenant une demande d'aide à la synchronisation, la première passerelle vérifie si au moins une seconde passerelle est à portée pour recevoir ladite première trame et pour transmettre à la première passerelle des troisième trames de synchronisation, aucune première trame comprenant une demande d'aide à la synchronisation n'étant émise si aucune passerelle n'est à portée.

3. Procédé selon la revendication 1 ou 2, **caractérisé en ce que**, suite à l'émission de la première trame comprenant la demande d'aide à la synchronisation, si aucune réponse à ladite première trame n'est reçue après une durée prédéfinie, la première passerelle renouvelle sa demande d'aide à la synchronisation en émettant une nouvelle première trame comprenant la demande d'aide à la synchronisation.

4. Procédé de synchronisation d'une passerelle (11) d'un réseau (1) sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau (1) supportant ledit mode, dites passerelles de classe B, les émissions de balises étant synchronisées entre chaque passerelle de classe B, chaque période de communication étant divisée en un nombre prédéfini de sous-périodes, un terminal (13) du réseau (1) fonctionnant suivant ledit mode ne pouvant communiquer de manière bidirectionnelle avec un serveur (10) par l'intermédiaire d'une passerelle de classe B que pendant une sous-période qui lui a été allouée, le procédé étant **caractérisé en ce qu'**il comprend, lorsqu'il est mis en œuvre par le serveur (10):
recevoir (36) au moins une requête contenant une demande d'aide à la synchronisation formulée par une première passerelle et relayée par au moins une seconde passerelle ;
vérifier (38) une faisabilité d'une aide à la synchronisation, l'aide à la synchronisation étant possible lorsqu'au moins une passerelle parmi les au moins une seconde passerelle est équipée de moyens de synchronisation ;
lorsque l'aide à la synchronisation est possible, désigner (42) une seconde passerelle, dite passerelle désignée, équipée de moyens de synchronisation, pour relayer vers la première passerelle des informations représentatives d'une réponse à la demande d'aide à la synchronisation, lesdites informations permettant de mettre en place une transmission d'au moins une trame, dite trame de synchronisation, par la passerelle désignée, à destination de la première passerelle, dans une sous-période prédéterminée d'au moins une période de communication, chaque transmission d'une trame de synchronisation permettant à la première passerelle de déterminer au moins un instant d'émission d'une balise synchronisé avec des instants de transmission de balises de chaque passerelle de classe B dudit réseau; et,
transmettre (43) une requête comprenant lesdites informations à la passerelle désignée.

5. Procédé de synchronisation d'une passerelle (11) d'un réseau (1) sans fil à grande portée et permettant une faible consommation d'énergie, destiné à permettre à ladite passerelle de fonctionner selon un mode de communication, dit de classe B, dans lequel des périodes de communication sont définies à partir d'émissions périodiques de balises par chaque passerelle dudit réseau (1) supportant ledit mode, dites passerelles de classe B, les émissions de balises étant synchronisées entre chaque passerelle de classe B, chaque période de communication étant divisée en un nombre prédéfini de sous-périodes, un terminal (13) du réseau (1) fonctionnant suivant ledit mode ne pouvant communiquer de manière bidirectionnelle avec un serveur (10) par l'intermédiaire d'une passerelle de classe B que pendant une sous-période qui lui a été allouée, le procédé étant **caractérisé en ce qu'**il comprend, lorsqu'il est mis en œuvre par une seconde passerelle dudit réseau, la seconde passerelle étant de classe B et étant équipée de moyens de synchronisation :
recevoir (44) une requête en provenance du serveur comprenant des informations représentatives d'une réponse à une demande d'aide à la synchronisation formulée par une première passerelle, ladite demande ayant été relayée par la seconde passerelle vers ledit serveur ;
transmettre (44) une trame comprenant ladite réponse à la demande d'aide à la synchronisation à la première passerelle, ladite réponse permettant à la première passerelle de déterminer dans quelle sous-période d'au moins une période de communication la première passerelle doit recevoir une autre trame, dite trame de synchronisation ; et,
transmettre (49) au moins une trame de synchronisation à la première passerelle dans ladite sous-période, une réception d'une trame de synchronisation dans ladite sous-période permettant à la première passerelle de déterminer au moins un instant d'émission d'une balise synchronisé avec des instants de transmission de balises de chaque passerelle de classe B dudit réseau.

6. Procédé de synchronisation d'une passerelle mis en œuvre dans un réseau (1) sans fil à grande portée et permettant une faible consommation d'énergie, destiné à permettre à une passerelle de fonctionner selon un mode de communication, dit de classe B, dans lequel des périodes de communication sont définies à partir d'émissions périodiques de balises par chaque passerelle dudit réseau (1) supportant ledit mode, dites passerelles de classe B, les émissions de balises étant synchronisées entre chaque passerelle de classe B, chaque période de communication étant divisée en un nombre prédéfini de sous-périodes, un terminal (13) du réseau (1) fonctionnant suivant ledit mode ne pouvant communiquer de manière bidirectionnelle avec un serveur (10) par l'intermédiaire d'une passerelle de classe B que pendant une sous-période qui lui a été allouée, le procédé étant mis en œuvre par un système et comprenant le procédé selon la revendication 1 mis en œuvre par une première passerelle (11), le procédé selon la revendication 5 mis en œuvre par une seconde passerelle (12A), la seconde passerelle étant de classe B et étant équipée de moyens de synchronisation et le procédé selon la revendication 4 mis en œuvre par un serveur (10).

7. Procédé selon la revendication 6, **caractérisé en ce que** la trame comprenant la demande d'aide à la synchronisation comprend un identifiant unique permettant au serveur (10) de déterminer quelle passerelle a fait la demande d'aide à la synchronisation.

8. Procédé selon la revendication 6 ou 7, **caractérisé en ce que** la sous-période utilisée pour transmettre une trame de synchronisation est déterminée par la première passerelle et les informations représentatives d'une réponse à la demande d'aide à la synchronisation comprennent une information représentative de ladite sous-période.

9. Procédé selon la revendication 6 ou 7, **caractérisé en ce que** la sous-période utilisée pour transmettre une trame de synchronisation est déterminée par le serveur (10) et la trame comprenant la demande d'aide à la synchronisation comprend une information représentative de ladite sous-période.

10. Procédé selon l'une quelconque des revendications 6 à 9, **caractérisé en ce que** ledit procédé est mis en œuvre pendant une durée prédéterminée.

11. Procédé selon l'une quelconque des revendications 6 à 10, **caractérisé en ce qu'**une pluralité de trames de synchronisation sont transmises avec une périodicité prédéterminée.

12. Procédé selon l'une quelconque des revendications 6 à 11, **caractérisé en ce que** lorsque la sous-période utilisée pour transmettre la trame de synchronisation coïncide avec une sous-période attribuée à la seconde passerelle pour d'autres communications, le serveur (10) désigne, temporairement ou définitivement, une autre passerelle de classe B dudit réseau (1), équipée de moyens de synchronisation, pour transmettre au moins une trame de synchronisation à la première passerelle.

13. Procédé selon l'une quelconque des revendications 6 à 12, **caractérisé en ce que**, préalablement à l'émission de la trame comprenant la demande d'aide à la synchronisation, la première passerelle (11) transmet au serveur (10) une demande d'aide à la synchronisation préliminaire en utilisant un lien de communication directe avec le serveur (10), déclenchant une mise en œuvre par le serveur (10) d'une procédure de prétraitement permettant au serveur (10) de déterminer s'il peut autoriser la première passerelle à transmettre la trame comprenant la demande d'aide à la synchronisation.

14. Procédé selon l'une quelconque des revendications 6 à 12, **caractérisé en ce que**, préalablement à l'émission de la trame comprenant la demande d'aide à la synchronisation, le serveur 10 envoie une requête à la première passerelle demandant à la première passerelle d'émettre une trame comprenant une demande d'aide à la synchronisation.

15. Procédé selon l'une quelconque des revendications 6 à 14, **caractérisé en ce que** les informations représentatives d'une réponse à la demande d'aide à la synchronisation comprennent une information permettant à une pluralité de passerelles, comprenant la première passerelle, de déterminer au moins un prochain instant d'émission d'une balise par chaque passerelle de classe B dudit réseau (1) et de transmettre une balise à chaque prochain instant d'émission déterminé.

16. Procédé selon l'une quelconque des revendications précédentes, **caractérisé en ce que** le réseau (1) est un réseau LoRa.

17. Dispositif de type passerelle (11) comprenant des moyens pour mettre en œuvre le procédé selon l'une des revendications 1 à 3.

18. Dispositif de type passerelle (12A) comprenant des moyens pour mettre en œuvre le procédé selon la revendication 5.

19. Dispositif de type serveur (10) comprenant des moyens pour mettre en œuvre le procédé selon la revendication 4.

20. Système comprenant au moins un dispositif selon la revendication au moins un dispositif selon la revendication 18 et un dispositif selon la revendication 19.

21. Programme d'ordinateur, **caractérisé en ce qu'**il comprend des instructions pour mettre en œuvre, par un dispositif, le procédé selon l'une quelconque des revendications 1 à 3 ou le procédé selon la revendication 4 ou le procédé selon la revendication 5 ou le procédé selon l'une quelconque des revendications 6 à 16, lorsque ledit programme est exécuté par un processeur dudit dispositif.

22. Moyens de stockage, **caractérisés en ce qu'**ils stockent un programme d'ordinateur comprenant des instructions pour mettre en œuvre, par un dispositif, le procédé selon l'une quelconque des revendications 1 à 3 ou le procédé selon la revendication 4 ou le procédé selon la revendication 5 ou le procédé selon l'une quelconque des revendications 6 à 16, lorsque ledit programme est exécuté par un processeur dudit dispositif.

## Patentansprüche

1. Verfahren zur Synchronisation eines Gateways (11) eines drahtlosen Netzwerks (1), das eine große Reichweite aufweist und einen geringen Energieverbrauch gestattet, das dazu bestimmt ist, dem Gateway zu gestatten, gemäß einem Kommunikationsmodus zu funktionieren, dem Klasse-B-Kommunikationsmodus, wobei Kommunikationsperioden anhand von periodischen Beacon-Emissionen von jedem Gateway des Netzwerks (1) definiert werden, der den Modus unterstützt, den Klasse-B-Gateways, wobei die Beacon-Emissionen zwischen jedem Klasse-B-Gateway synchronisiert werden, wobei jede Kommunikationsperiode in eine vorgegebene Anzahl von Unterperioden unterteilt ist, wobei ein Endgerät (13) des Netzwerks (1), das gemäß dem Modus funktioniert, nur während einer Unterperiode, die ihm zugewiesen wurde, bidirektional mit einem Server (10) mittels eines Klasse-B-Gateways kommunizieren kann, wobei das Verfahren **dadurch gekennzeichnet ist, dass** es Folgendes umfasst, wenn es von einem ersten Gateway (11) durchgeführt wird:
Emittieren (32), an den Server (10) mittels mindestens eines zweiten Gateways des Netzwerks (1), eines ersten Rahmens umfassend eine Anforderung von Hilfe bei der Synchronisation;
Empfangen (45) eines zweiten Rahmens umfassend Informationen, die für eine Antwort auf die Anforderung von einem Gateway des Netzwerks (1), dem designierten Gateway, repräsentativ sind, der mit Synchronisationsmitteln ausgerüstet ist, wobei der designierte Gateway von dem Server (10) aus dem mindestens einen zweiten Gateway designiert wurde, wobei es der Empfang des zweiten Rahmens dem ersten Gateway (11) gestattet, mindestens eine Kommunikationsperiode zu bestimmen, während welcher der erste Gateway (11) einen dritten Rahmen, den Synchronisationsrahmen, von dem designierten Gateway empfangen soll;
Beziehen (46) von Informationen, die für eine Unterperiode jeder bestimmten Kommunikationsperiode repräsentativ sind, die von dem designierten Gateway dafür genutzt wird, einen Synchronisationsrahmen zu übertragen, wobei die Unterperiode einen vorgegebenen Abstand zu einem Beacon aufweist, der unmittelbar auf die Kommunikationsperiode folgt;
Empfangen (50) mindestens eines Synchronisationsrahmens; und,
für jeden empfangenen Synchronisationsrahmen: Bestimmen (50), anhand eines Empfangszeitpunkts des Synchronisationsrahmens und des vorgegebenen Abstands, mindestens eines nächsten Emissionszeitpunkts eines Beacons von jedem Klasse-B-Gateway des Netzwerks (1); und Übertragen (51) eines Beacons zu jedem nächsten bestimmten Emissionszeitpunkt.

2. Verfahren nach Anspruch 1, **dadurch gekennzeichnet, dass** vor dem Emittieren des ersten Rahmens umfassend eine Anforderung von Hilfe bei der Synchronisation der erste Gateway überprüft, ob sich mindestens ein zweiter Gateway in Reichweite befindet, um den ersten Rahmen zu empfangen, und um dritte Synchronisationsrahmen an den ersten Gateway zu übertragen, wobei kein erster Rahmen umfassend eine Anforderung von Hilfe bei der Synchronisation emittiert wird, wenn sich kein Gateway in Reichweite befindet.

3. Verfahren nach Anspruch 1 oder 2, **dadurch gekennzeichnet, dass** nach der Emission des ersten Rahmens umfassend die Anforderung von Hilfe bei der Synchronisation, wenn keine Antwort auf den ersten Rahmen nach einer vorgegebenen Dauer empfangen wird, der erste Gateway seine Anforderung von Hilfe bei der Synchronisation durch Emittieren eines neuen ersten Rahmens umfassend die Anforderung von Hilfe bei der Synchronisation erneuert.

4. Verfahren zur Synchronisation eines Gateways (11) eines drahtlosen Netzwerks (1), das eine große Reichweite aufweist und einen geringen Energieverbrauch gestattet, das dazu bestimmt ist, dem Gateway zu gestatten, gemäß einem Kommunikationsmodus zu funktionieren, dem Klasse-B-Kommunikationsmodus, wobei Kommunikationsperioden anhand von periodischen Beacon-Emissionen von jedem Gateway des Netzwerks (1) definiert werden, der den Modus unterstützt, den Klasse-B-Gateways, wobei die Beacon-Emissionen zwischen jedem Klasse-B-Gateway synchronisiert werden, wobei jede Kommunikationsperiode in eine vorgegebene Anzahl von Unterperioden unterteilt ist, wobei ein Endgerät (13) des Netzwerks (1), das gemäß dem Modus funktioniert, nur während einer Unterperiode, die ihm zugewiesen wurde, bidirektional mit einem Server (10) mittels eines Klasse-B-Gateways kommunizieren kann, wobei das Verfahren **dadurch gekennzeichnet ist, dass** es Folgendes umfasst, wenn es von dem Server (10) durchgeführt wird:
Empfangen (36) mindestens einer Anfrage, die eine Anforderung von Hilfe bei der Synchronisation enthält, die von einem ersten Gateway formuliert und von mindestens einem zweiten Gateway weitergeleitet wird;
Überprüfen (38) einer Durchführbarkeit einer Hilfe bei der Synchronisation, wobei die Hilfe bei der Synchronisation möglich ist, wenn mindestens ein Gateway aus dem mindestens einem Gateway mit Synchronisationsmitteln ausgerüstet ist;
wenn die Hilfe bei der Synchronisation möglich ist, Designieren (42) eines zweiten Gateways, des designierten Gateways, der mit Synchronisationsmitteln ausgerüstet ist, um Informationen an den ersten Gateway weiterzuleiten, die für eine Antwort auf die Anforderung von Hilfe bei der Synchronisation repräsentativ sind, wobei es die Informationen gestatten, eine Übertragung mindestens eines Rahmens, des Synchronisationsrahmens, von dem designierten Gateway an den ersten Gateway in einer vorbestimmten Unterperiode mindestens einer Kommunikationsperiode einzurichten, wobei jede Übertragung eines Synchronisationsrahmens dem ersten Gateway gestattet, mindestens einen Emissionszeitpunkt eines Beacons zu bestimmen, der mit Übertragungszeitpunkten von Beacons jedes Klasse-B-Gateways des Netzwerks synchronisiert ist; und,
Übertragen (43) einer Anfrage umfassend die Informationen an den designierten Gateway.

5. Verfahren zur Synchronisation eines Gateways (11) eines drahtlosen Netzwerks (1), das eine große Reichweite aufweist und einen geringen Energieverbrauch gestattet, das dazu bestimmt ist, dem Gateway zu gestatten, gemäß einem Kommunikationsmodus zu funktionieren, dem Klasse-B-Kommunikationsmodus, wobei Kommunikationsperioden anhand von periodischen Beacon-Emissionen von jedem Gateway des Netzwerks (1) definiert werden, der den Modus unterstützt, den Klasse-B-Gateways, wobei die Beacon-Emissionen zwischen jedem Klasse-B-Gateway synchronisiert werden, wobei jede Kommunikationsperiode in eine vorgegebene Anzahl von Unterperioden unterteilt ist, wobei ein Endgerät (13) des Netzwerks (1), das gemäß dem Modus funktioniert, nur während einer Unterperiode, die ihm zugewiesen wurde, bidirektional mit einem Server (10) mittels eines Klasse-B-Gateways kommunizieren kann, wobei das Verfahren **dadurch gekennzeichnet ist, dass** es Folgendes umfasst, wenn es von einem zweiten Gateway des Netzwerks durchgeführt wird, wobei der zweite Gateway von der Klasse B ist und mit Synchronisationsmitteln ausgerüstet ist:
Empfangen (44) einer Anfrage von dem Server umfassend Informationen, die für eine Antwort auf eine Anforderung von Hilfe bei der Synchronisation repräsentativ sind, die von einem ersten Gateway formuliert wird, wobei die Anforderung von dem zweiten Gateway an den Server weitergeleitet wurde;
Übertragen (44) eines Rahmens umfassend die Antwort auf die Anforderung von Hilfe bei der Synchronisation an den ersten Gateway, wobei die Antwort dem ersten Gateway gestattet, zu bestimmen, in welcher Unterperiode mindestens einer Kommunikationsperiode der erste Gateway einen anderen Rahmen, den Synchronisationsrahmen, empfangen soll; und,
Übertragen (49) mindestens eines Synchronisationsrahmens an den ersten Gateway in der Unterperiode, wobei ein Empfang eines Synchronisationsrahmens in der Unterperiode dem ersten Gateway gestattet, mindestens einen Emissionszeitpunkt eines Beacons zu bestimmen, der mit Übertragungszeitpunkten von Beacons jedes Klasse-B-Gateways des Netzwerks synchronisiert ist.

6. Verfahren zur Synchronisation eines Gateways, das in einem drahtlosen Netzwerk (1) durchgeführt wird, das eine große Reichweite aufweist und einen geringen Energieverbrauch gestattet, das dazu bestimmt ist, einem Gateway zu gestatten, gemäß einem Kommunikationsmodus zu funktionieren, dem Klasse-B-Kommunikationsmodus, wobei Kommunikationsperioden anhand von periodischen Beacon-Emissionen von jedem Gateway des Netzwerks (1) definiert werden, der den Modus unterstützt, den Klasse-B-Gateways, wobei die Beacon-Emissionen zwischen jedem Klasse-B-Gateway synchronisiert werden, wobei jede Kommunikationsperiode in eine vorgegebene Anzahl von Unterperioden unterteilt ist, wobei ein Endgerät (13) des Netzwerks (1), das gemäß dem Modus funktioniert, nur während einer Unterperiode, die ihm zugewiesen wurde, bidirektional mit einem Server (10) mittels eines Klasse-B-Gateways kommunizieren kann, wobei das Verfahren von einem System durchgeführt wird und umfassend das Verfahren nach Anspruch 1, das von einem ersten Gateway (11) durchgeführt wird, das Verfahren nach Anspruch 5, das von einem zweiten Gateway (12A) durchgeführt wird, wobei der zweite Gateway von der Klasse B ist und mit Synchronisationsmitteln ausgerüstet ist, und das Verfahren nach Anspruch 4, das von einem Server (10) durchgeführt wird.

7. Verfahren nach Anspruch 6, **dadurch gekennzeichnet, dass** der Rahmen umfassend die Anforderung von Hilfe bei der Synchronisation eine eindeutige Kennung umfasst, die es dem Server (10) gestattet, zu bestimmen, welcher Gateway die Anforderung von Hilfe bei der Synchronisation abgegeben hat.

8. Verfahren nach Anspruch 6 oder 7, **dadurch gekennzeichnet, dass** die Unterperiode, die dafür genutzt wird, einen Synchronisationsrahmen zu übertragen, von dem ersten Gateway bestimmt wird und die Informationen, die für eine Antwort auf die Anforderung von Hilfe bei der Synchronisation repräsentativ sind, eine Information umfassen, die für die Unterperiode repräsentativ ist.

9. Verfahren nach Anspruch 6 oder 7, **dadurch gekennzeichnet, dass** die Unterperiode, die dafür genutzt wird, einen Synchronisationsrahmen zu übertragen, von dem Server (10) bestimmt wird und der Rahmen umfassend die Anforderung von Hilfe bei der Synchronisation eine Information umfasst, die für die Unterperiode repräsentativ ist.

10. Verfahren nach einem der Ansprüche 6 bis 9, **dadurch gekennzeichnet, dass** das Verfahren während einer vorbestimmten Dauer durchgeführt wird.

11. Verfahren nach einem der Ansprüche 6 bis 10, **dadurch gekennzeichnet, dass** eine Mehrzahl von Synchronisationsrahmen mit einer vorbestimmten Periodizität übertragen werden.

12. Verfahren nach einem der Ansprüche 6 bis 11, **dadurch gekennzeichnet, dass**, wenn die Unterperiode, die dafür genutzt wird, den Synchronisationsrahmen zu übertragen, mit einer Unterperiode zusammenfällt, die dem zweiten Gateway für andere Kommunikationen zugeteilt ist, der Server (10) vorläufig oder endgültig einen anderen Klasse-B-Gateway des Netzwerks (1) designiert, der mit Synchronisationsmitteln ausgerüstet ist, um mindestens einen Synchronisationsrahmen an den ersten Gateway zu übertragen.

13. Verfahren nach einem der Ansprüche 6 bis 12, **dadurch gekennzeichnet, dass** vor der Emission des Rahmens umfassend die Anforderung von Hilfe bei der Synchronisation der erste Gateway (11) eine Voranforderung von Hilfe bei der Synchronisation mithilfe einer direkten Kommunikationsverbindung zum Server (10) an den Server (10) überträgt, wobei eine Durchführung, von dem Server (10), eines Vorverarbeitungsverfahrens ausgelöst wird, das es dem Server (10) gestattet, zu bestimmen, ob er es dem ersten Gateway erlauben kann, den Rahmen umfassend die Anforderung von Hilfe bei der Synchronisation zu übertragen.

14. Verfahren nach einem der Ansprüche 6 bis 12, **dadurch gekennzeichnet, dass** vor der Emission des Rahmens umfassend die Anforderung von Hilfe bei der Synchronisation der Server (10) eine Anfrage an den ersten Gateway sendet, die von dem ersten Gateway fordert, einen Rahmen umfassend eine Anforderung von Hilfe bei der Synchronisation zu emittieren.

15. Verfahren nach einem der Ansprüche 6 bis 14, **dadurch gekennzeichnet, dass** die Informationen, die für eine Antwort auf die Anforderung von Hilfe bei der Synchronisation repräsentativ sind, eine Information umfassen, die es einer Mehrzahl von Gateways, die den ersten Gateway umfasst, gestattet, mindestens einen nächsten Emissionszeitpunkt eines Beacons von jedem Klasse-B-Gateway des Netzwerks (1) zu bestimmen und einen Beacon zu jedem nächsten bestimmten Emissionszeitpunkt zu übertragen.

16. Verfahren nach einem der vorhergehenden Ansprüche, **dadurch gekennzeichnet, dass** das Netzwerk (1) ein LoRa-Netzwerk ist.

17. Vorrichtung vom Typ eines Gateways (11) umfassend Mittel, um das Verfahren nach einem der Ansprüche 1 bis 3 durchzuführen.

18. Vorrichtung vom Typ eines Servers (12A) umfassend Mittel, um das Verfahren nach Anspruch 5 durchzuführen.

19. Vorrichtung vom Typ eines Servers (10) umfassend Mittel, um das Verfahren nach Anspruch 4 durchzuführen.

20. System, umfassend mindestens eine Vorrichtung nach Anspruch 17, mindestens eine Vorrichtung nach Anspruch 18 und eine Vorrichtung nach Anspruch 19.

21. Computerprogramm, **dadurch gekennzeichnet, dass** es Anweisungen umfasst, um durch eine Vorrichtung das Verfahren nach einem der Ansprüche 1 bis 3 oder das Verfahren nach Anspruch 4 oder das Verfahren nach Anspruch 5 oder das Verfahren nach einem der Ansprüche 6 bis 16 durchzuführen, wenn das Programm von einem Prozessor der Vorrichtung ausgeführt wird.

22. Speichermittel, **dadurch gekennzeichnet, dass** sie ein Computerprogramm speichern, das Anweisungen umfasst, um durch eine Vorrichtung das Verfahren nach einem der Ansprüche 1 bis 3 oder das Verfahren nach Anspruch 4 oder das Verfahren nach Anspruch 5 oder das Verfahren nach einem der Ansprüche 6 bis 16 durchzuführen, wenn das Programm von einem Prozessor der Vorrichtung ausgeführt wird.

## Claims

1. Method for synchronising a gateway (11) in a long-range wireless network (1) affording low energy consumption, intended to enable said gateway to function according to a communication mode, known as class B, in which communication periods are defined from periodic emissions of beacons by each gateway in said network (1) supporting said mode, referred to as class B gateways, the beacon transmissions being synchronised between each class B gateway, each communication period being divided into a predefined number of subperiods, an end device (13) of the network (10) functioning in accordance with said mode being able to communicate bidirectionally with a server (10) by means of a class B gateway only during a subperiod that has been allocated to it, the method being **characterised in that** it comprises, when it is implemented by a first gateway (11):
sending, (32) to said server (10), by means of at least one second gateway of said network (1), a first frame comprising a synchronisation aid request;
receiving (45) a second frame comprising information representing a response to said request coming from a gateway in said network (1), referred to as the designated gateway, equipped with synchronisation means, the designated gateway having been designated by the server (10) among the at least one second gateway, the reception of said second frame enabling the first gateway (11) to determine at least one communication period during which the first gateway (11) must receive a third frame, referred to as the synchronisation frame, coming from said designated gateway;
obtaining (46) information representing a subperiod of each communication period determined used by the designated gateway to transmit a synchronisation frame, said subperiod having a predefined offset from a beacon directly following the communication period;
receiving (50) at least one synchronisation frame; and
for each synchronisation frame received: determining (50), as from an instant of receiving said synchronisation frame and the predefined offset, at least one next instant of sending a beacon for each class B gateway in said network (1); and transmitting (51) a beacon at each next transmission instant determined.

2. Method according to claim 1, **characterised in that**, before sending the first frame comprising a synchronisation aid request, the first gateway checks whether at least one second gateway is within range for receiving said first frame and for transmitting third synchronisation frames to the first gateway, no first frame comprising a synchronisation aid request being sent if no gateway is within range.

3. Method according to claim 1 or claim 2, **characterised in that**, following the sending of the first frame comprising the synchronisation aid request, if no response to said first frame is received after a predefined time, the first gateway renews its synchronisation aid request by sending a new fixed frame comprising the synchronisation aid request.

4. Method for synchronising a gateway (11) in a long-range wireless network (1) affording low energy consumption, intended to enable said gateway to function in accordance with a communication mode, referred to as class B, in which communication periods are defined from periodic sendings of beacons by each gateway in said network (1) supporting said mode, referred to as class B gateways, the sendings of beacons being synchronised between each class B gateway, each communication period being divided into a predefined number of subperiods, an end device (13) of the network (1) functioning in accordance with said mode being able to communicate bidirectionally with a server (10) by means of a class B gateway only during a subperiod that was allocated to it, the method being **characterised in that** it comprises, when it is implemented by the server (10):
receiving (36) at least one request containing a synchronisation aid request made by a first gateway and relayed by at least one second gateway;
checking (38) feasibility of synchronisation aid, synchronisation aid being possible when at least one gateway among the at least one second gateway is equipped with synchronisation means;
when synchronisation aid is possible, designating (42) a second gateway, referred to as the designated gateway, equipped with synchronisation means, for relaying to the first gateway information representing a response to the synchronisation aid request, said information making it possible to establish a transmission of at least one frame, referred to as a synchronisation frame, by the designated gateway, to the first gateway, in a predetermined subperiod of at least one communication period, each transmission of a synchronisation frame enabling the first gateway to determine at least one instant of sending of a beacon synchronised with instants of transmission of beacons of each class B gateway in said network; and
transmitting (43) a request comprising said information to the designated gateway.

5. Method for synchronising a gateway (11) in a long-range wireless network (1) affording low energy consumption, intended to enable said gateway to function in accordance with a communication mode, referred to as class B, in which communication periods are defined from periodic sendings of beacons by each gateway in said network (1) supporting said mode, referred to as class B gateways, the sendings of beacons being synchronised between each class B gateway, each communication period being divided into a predefined number of subperiods, an end device (13) of the network (1) functioning in accordance with said mode being able to communicate bidirectionally with a server (10) by means of a class B gateway only during a subperiod that was allocated to it, the method being **characterised in that** it comprises, when it is implemented by a second gateway in said network, the second gateway being of class B and being equipped with synchronisation means:
receiving (44) a request from the server comprising information representing a response to a synchronisation aid request made by a first gateway, said request having been relayed by the second gateway to said server;
transmitting (44) a frame comprising said response to the synchronisation aid request to the first gateway, said response enabling the first gateway to determine in which subperiod of at least one communication period the first gateway must receive a synchronisation frame; and
transmitting (49) at least one synchronisation frame to the first gateway in said subperiod, a reception of a synchronisation frame in said subperiod enabling the first gateway to determine at least one instant of sending a beacon synchronised with instants of transmitting beacons of each class B gateway in said network.

6. Method for synchronising a gateway implemented in a long-range wireless network (1) affording low energy consumption, intended to enable said gateway to function in accordance with a communication mode, referred to as class B, in which communication periods are defined from periodic sendings of beacons by each gateway in said network (1) supporting said mode, referred to as class B gateways, the sendings of beacons being synchronised between each class B gateway, each communication period being divided into a predefined number of subperiods, an end device (13) of the network (1) functioning in accordance with said mode being able to communicate bidirectionally with a server (10) by means of a class B gateway only during a subperiod that was allocated to it, the method being implemented by a system and comprising the method according to claim 1 implemented by a first gateway (11), the method according to claim 5 implemented by a second gateway (12A), the second gateway being of class B and being equipped with synchronisation means and the method according to claim 4 implemented by a server (10).

7. Method according to claim 6, **characterised in that** the frame comprising the synchronisation aid request comprises a unique identifier enabling the server (10) to determine which gateway has made the synchronisation aid request.

8. Method according to claim 6 or claim 7, **characterised in that** the subperiod used for transmitting a synchronisation frame is determined by the first gateway and the information representing a response to the synchronisation aid request comprises information representing said subperiod.

9. Method according to claim 6 or claim 7, **characterised in that** the subperiod used for transmitting a synchronisation frame is determined by the server (10) and the frame comprising the synchronisation aid request comprises information representing said subperiod.

10. Method according to any of claims 6 to 9, **characterised in that** aid method is implemented for a predetermined period.

11. Method according to any of claims 6 to 10, **characterised in that** a plurality of synchronisation frames are transmitted with a predetermined periodicity.

12. Method according to any of claims 6 to 11, **characterised in that**, when the subperiod used for transmitting the synchronisation frame coincides with a subperiod attributed to the second gateway for other communications, the server (10), temporarily or definitively, designates another class B gateway in said network (1), equipped with synchronisation means, for transmitting at least one synchronisation frame to the first gateway.

13. Method according to any of claims 6 to 12, **characterised in that**, prior to the sending of the frame comprising the synchronisation aid request, the first gateway (11) transmits to the server (10) a preliminary synchronisation aid request using a direct communication link with the server (10), triggering an implementation by the server (10) of a preprocessing procedure enabling the server (10) to determine whether it can enable the first gateway to transmit the frame comprising the synchronisation aid request.

14. Method according to any of claims 6 to 12, **characterised in that**, prior to the sending of the frame comprising the synchronisation aid request, the server (10) sends a request to the first gateway requesting the first gateway to send a frame comprising a synchronisation aid request.

15. Method according to any of claims 6 to 14, **characterised in that** the information representing a response to the synchronisation aid request comprises information enabling a plurality of gateways, comprising the first gateway, to determine at least one future instant of sending of a beacon by each class B gateway in said network (1) and to transmit a beacon at each future sending instant determined.

16. Method according to any of the preceding claims, **characterised in that** the network (1) is a LoRa network.

17. Device of the gateway type (11) comprising means for implementing the method according to any of claims 1 to 3.

18. Device of the gateway type (12A) comprising means for implementing the method according to claim 5.

19. Device of the server type (10) comprising means for implementing the method according to claim 4

20. System comprising at least one device according to claim 17, at least one device according to claim 18 and one device according to claim 19.

21. Computer program, **characterised in that** it comprises instructions for the implementation, by a device, of the method according to any of claims 1 to 3 or the method according to claim 4 or the method according to claim 5 or the method according to any of claims 6 to 16, when said program is executed by a processor of said device.

22. Storage means, **characterised in that** they store a computer program comprising instructions for the implementation, by a device, of the method according to any of claims 1 to 3 or the method according to claim 4 or the method according to claim 5 or the method according to any of claims 6 to 16, when said program is executed by a processor of said device.
